# EUROPEAN PATENT APPLICATION

(11) **EP 1 132 847 A2**
(43) Date of publication of application: **12.09.2001**
(21) Application number: 01480015.5
(22) Date of filing: 15.02.2001
(51) Int. Cl.: G06F 17/60, G06F 17/30

(54) **System and method for collaborative multi-device web browsing**

(30) Priority: 24.02.2000 US 512510
(71) Applicant: INTERNATIONAL BUSINESS MACHINES CORPORATION, Armonk, NY 10504 (US)
(72) Inventor: Han, Richard Y., New York, NY (US); Korpeoglu, Ibrahim, Santa Barbara, CA 93111 (US); Naghshineh, Mahmoud, Hopewell Junction, NY (US); Perret, Veronique, Tarrytown, NY 10591 (US)
(74) Representative: Etorre, Yves Nicolas

(57) **Abstract**

A collaboration system and method for selectively providing access to portions of Web content for display to users according to levels of access privilege and for directing different portions of the Web content for display at different user-designated devices. The inventive system and method of Web browsing does not restrict the multimedia output to the requesting device, such that the end user can choose which device should receive the Web content, and can even select several devices that will collaborate to display the Web content. A proxy entity is introduced between the Web server and the user location(s). Documents which are to be presented to multiple users have a policy file that defines multiple privilege groups. Each privilege group has access to a different set of tags. Each user will login into a given group, and will also identify to the proxy, via service discovery, all of the devices that the user owns. Given all of this information, the proxy can construct an overall mapping of permitted tags to permitted output devices, i.e. each tag that the user is permitted to access is mapped to one or more output devices that the user owns or is permitted to access.

## Description

### Field of the Invention

The invention relates generally to web-based browsing of content and more particularly to user viewing and interaction with portions of the content which are selectively provided to one of a plurality of user locations.

### Background of the Invention

Groupware applications have developed to serve the need for collaborative work being conducted on a single document from multiple remote locations. For example, a plurality of corporate employees can view a presentation from their respective offices around the globe or a plurality of students can "attend" a professor's lecture from their respective remotely-located workstations. Most available groupware applications are intranet based, such that a central corporate or university-based server loads and manages access to the document. An extension of the intranet groupware model to the worldwide web has been the subject of research and development of late. It is desirable to provide the multiple party collaboration capability as an optimal utilization of the worldwide web, to thereby allow multiple users to view a single document at the same time.

A project at the University of North Carolina (see: D. Stotts, J. Prins, L. Nyland, T. Fan, "CobWeb: Tailorable, Analyzable Rules for Collaborative Web Use" teaches one version of a collaborative Web browsing system. The goal of the Stotts, et al project is to allow multiple individuals (a leader and followers) working on separate workstations in the world to collaboratively browse the Web. The followers can see the Web pages fetched by the leader and all of the attendees can communicate through a shared whiteboard. The interaction between the leader and the audience is determined by a collaboration protocol chosen at the beginning of the session. The choice of the protocol determines which applet is sent to the user. There are two protocols, lecture and conference, which differ in the set of functions provided to the participants. For example, the Web lecture protocol displays buttons to the user to let him "take the lead" or "break" (meaning that he doesn't want to receive the lecturer's view for the time being). The Web conference protocol wouldn't provide the same functions to the users. For example, the Web conference protocol would have buttons with functions such as *"Grab Floor"* or *"Add Person".* What the Stotts, et al system does not provide is a mechanism for providing less than all of the content to less than all of the users and/or the user's devices.

Another groupware model is the VIEW Media* (asterisk * , here and hereinafter throughout this document indicates that the designated term may be a trademark of the respective owner) cooperative hypermedia system that allows a conferencing system to limit the views of shared document that different users can obtain, based on the access rights of each user to the shared documents (see: Y. Yokota, T. Nakamura, H. Tarumi, Y. Kambayashi, "Multiple Dynamic View Support for Cooperative Work," *Proc. of IEEE Int'l Conf*. *on Database Systems for Advanced Applications,* 1999, pp. 331-338). VIEW Media provides a way for a lecturer to prevent students from seeing the lecturer's private annotations. The VIEW Media approach views a hypermedia document as consisting of multiple components, whereby different subsets of these components can be selectively sent to different recipients of a groupware session. Consequently, multiple partial views are supported, instead of the WYSIWIS (What-you-see-is-what-I-see) principle found in conventional groupware. Also, four levels of user access rights are supported: a hypermedia object can be received in whole by the user; an object can be received in part; an object cannot be received but knowledge of its existence can be received; neither an object nor its existence can be received by the user. An intermediate proxy, called a Resource Manage Server which is placed on a Web server, creates the multiple views from a hypertext document (e.g. Web page) and administrates the distribution of same.

Another groupware system, the CAT* (collaborative active textbooks) system, allows multiple users to see different partial views of the same Web animation show (see: M. Brown, M. Najork, "Collaborative Active Textbooks: a Web-Based Algorithm Animation System for an Electronic Classroom," *IEEE Symposium on Visual Languages,* 1996, pp. 266-275). An instructor's screen may contain multiple animation views of the same algorithm, along with a control screen to adjust the animation (e.g. speed). Each student points at the same Web page and receives multiple views of the animation, but does not see the control screen. The animation is written in a special language that identifies interesting points in a sequence. Downloaded client-side applets receive and react to interesting points. In this way, the instructor controls the pace of the animation, but the student controls what views the student sees. Each student can interact with their own views, independent of the instructor and other students. However, if the instructor changes Web pages, then all students must manually change to the new Web page, in order to receive the new animations. What is desirable, however, is to permit the users in the audience to automatically receive the new Web page once the instructor has changed pages. Another shortcoming of the Brown, et al work is that multiple views are composed by the author a priori. It is desirable to provide for the creation of multiple views "on-the-fly", based on paring down a base Web page into sub-documents.

Shared remote control of a video conferencing application has been proposed by T. Hodes, M. Newman, S. McCanne, R. Katz, J. Landay, in "Shared Remote Control of a Video Conferencing Application: Motivation, Design, and Implementation," SPIE *Multimedia Computing and Networking (MMCN),* Proc. SPIE, vol. 3654, 1998 (conf. held Jan 1999), pp. 17-28. A PDA is used as a remote control for manipulating a video conferencing application, "rvic" (remote video conferencing). The authors also describe a service discovery mechanism. The Hodes, et al application of remote control deals with streaming conferencing application, however, and not the Web.

Stanford's Interactive Workspace Project, described by Professor Armando Fox in an article found at http://graphics.stanford.edu/projects/iwork/ introduces the notion of "multi-browsing'. The goal of this project was to experiment with multi-device, multi-user environments and, in particular, to move work of all kinds from one computing device to another, and to support and facilitate group interactions. Under such a system, a user would interact with multiple devices in a serialized fashion. For example, as the user moves in the room, the device he is interacting with to see his application or complete a task would change. There is also the notion of using several devices in parallel, each displaying the same document. Mainly, this project is focused on wall displays where different pictures could be seen on each display. In the case of a slide presentation for example, different pages in a presentation would appear on different screens and, as the user moved, the presentation would follow the user. This project investigates more how to interact with the room infrastructure and involves sensors to get location information.

Interaction between one or more PDA's and a digital whiteboard has been implemented, as detailed by J. Rekimoto in "A Multiple Device Approach for Supporting Whiteboard-based Interactions," *Human Factors in Computing Systems (CHI)* 1998, pp.344-351). In his first example, the author describes a system in which a user can "pick" an object on one computer's screen and "drop" it onto another computer's screen. In a second example, the author demonstrates a system that allows a user to draw on a PDA and then "pick-and-drop" the newly drawn object from the PDA onto a digital whiteboard using the same pen. The PDA is also used to set the brush type and color of the pen and can change the appearance attributes of objects on the screen. In this way, the PDA is used as a remote control to manipulate the whiteboard application.

MIT Media Lab's "Let's Browse"* system implements another form of collaborative Web browsing as detailed by H. Lieberman, N. Van Dyke and A. Vivacqua in "Let's Browse: a collaborative browsing agent," *Knowl. Based Syst.* (UK), Vol.12, No.8 Dec. 1999, pp. 427-431. In the "Let's Browse" system, each user has a profile of preferred Web pages. When a user is in proximity of a Web browsing computer, an agent on the computer will prefetch Web pages that match the user's profile. When there are multiple users viewing a browsing session together, the agent will find pages that match the intersection of interests of the users. The authors also contemplate active input from one or more users and its effect on updating each user's profile.

Yet another collaboration system has been presented by RealNetworks*. The product, called Real Presenter, allows multiple recipients to view a Web presentation (see: http://www.realnetworks.com/products/presenterplus/info.html) and to allow the presenter to record a narration with each slide (or even some video) from a presentation. The presenter can then convert the presentation into a RealMedia* document and upload it into a web server, where anybody can access it from their local computer.

There is also a live broadcasting version of RealPresenter* which can be viewed at the web site http://web.calstatela.edu/ats/real/develop/broadcast.htm. For the live version, if the user clicks on the presentation link, he receives the live presentation that the presenter is giving at his desk using the RealPresenter software. The audio and slide data are sent to a RealServer* which then streams the data to anybody who clicks on the link. What would be additionally desirable in this product is to be able to split its output among an individual owner's multiple devices and to regulate access with some notion of privilege groups.

Microsoft's NetMeeting* (which can be viewed at the web site http://www.microsoft.com/catalog/display.asp?site=113&subid=22& pg=1) allows participants to collaborate and share Windows documents in real time. All the users see the same information on their screen using the standard data conferencing protocol T120.

Netscape Conference* (which can be viewed at website http://www.aibn.com/help/Software/Netscape/Communicator/Confere nce/browsing.html) provides a collaborative browsing feature that lets two people see the same web pages at the same time via the internet, wherein each can take control of the browser at any time. It uses the standard video conferencing protocols (H.323). Netscape Conference* also provides a whiteboard to be used for exchanging information.

Yet another service found at WebEx.com* enables multiple users to follow a common presentation online (see: http://www.webex.com). The screen of the browsing user is captured and sent to WebEx.com's server, where it is then relayed to the other users in the conferencing session. The system supports a mechanism to control who has the floor, and can be used not only for web pages but also for documents from any application (for example Microsoft Excel* documents or pdf documents).

Yet another system, Yahoo!* Games, allows multiple users to view the same game, and has a Web-based join mechanism. Interactive online games often permit partial views. For example, games like x-trek* could exchange instant messages with friends that other players could not see. However, such selective content display is not Web-based and is based on a private protocol, not HTTP. In addition, these online efforts do not split the output among multiple output devices.

What would additionally be desirable is a Web-based collaboration system and method wherein different portions of content are made available to different users. The above-referenced mechanisms do not have that capability. Moreover, it may be desirable to separate the output to multiple small client devices. For example, where a user's requesting device is a cell phone, it may not be practical to access the requested content using the small cell phone display and its limited audio capability. Rather, the user may wish to have the visual content displayed on an associated TV screen or computer monitor and have the audio delivered to a full range stereo system.

Common standards for video conferencing include H.323 for audio/video conferencing over packet-switched/IP networks, as well as T.120. There is a proposal to the W3C for annotating Web content to allow transcoding: "Annotation of Web Content for Transcoding" [W3C]. In this approach, content is annotated with metadata that describes to either a downstream entity or a server the importance of each component and how to transcode that component for display on an end device. The effort therefore attempts to adapt the web content to the capabilities of the receiving device. The W3C proposal assumes that web content is written in XML and uses a RDF (resource description framework) file to define the transcoding rules. In this file, a rule of what to send given the capabilities of the end-device is defined for the components that need it (like images or video files). However, this annotation does not permit splitting of a document. There is only one web page resulting from this adaptation and it is sent to the end device.

The emerging trend in personal devices is towards smaller and more portable devices that the user can carry and use anytime and anywhere. Mobile devices, such as a PDA, are often limited by technology to support only a small set of functions, e.g. a PDA may have a small screen and no audio, thereby limiting it to text-only support In addition to hardware limitations, such mobile devices have limited capabilities when acting in stand-alone disconnected mode. While PDA's support highly useful applications, such as calendaring and address books, the functions that PDA's can provide are inherently limited by the capabilities of the devices when disconnected. Integrating networked connectivity into portable devices enables the user of the mobile device to access a far richer set of applications that may be provided by the network, e.g. the user may access their own desktop applications, email and the Web, and may contact other users via a networked PDA or enhanced cell phone.

In light of the foregoing, what is needed, and what is therefore an object of the present invention, is a system and method to enhance the capabilities of mobile networked devices by enabling several networked devices, both mobile and fixed, to collaborate with one another.

Another object of the invention is to provide a virtual machine, defined as an aggregation of multiple fixed and mobile devices, in which the output of a single application can be selectively distributed among each of the devices in the collaborative environment.

### Summary of the Invention

The foregoing and other objects are realized by the present invention which provides a collaboration system and method for selectively providing access to portions of Web content for display to users according to levels of access privilege and for directing different portions of the Web content for display at different user-designated devices. The inventive system and method of Web browsing does not restrict the multimedia output to the requesting device, such that the end user can choose which device should receive the Web content, and can even select several devices that will collaborate to display the Web content. For example, the sound portion of the content could be sent to a high quality speaker while the video portion could be sent to a television screen, thereby allowing the user to pick the best device (best by quality or by convenience) available to play or display each component of the Web page. Consequently, collaborative multi-device Web browsing enables an end user to overcome the limited capabilities of a requesting device (e.g. the small display in a cell phone) by taking advantage of other nearby output devices with greater or different output functionality that would be more appropriate to serve that content, or part of that content. The functionality of each device is thereby extended by creating a virtual machine resulting from the collaboration of several devices.

The content on a Web page can also be sent either in whole or in part to more than one end user. With the inventive collaborative multi-device Web browsing, the content on a Web page can be automatically delivered to a whole group of people (with only one of them requesting it). The members of the group can receive the entire page or only part of a page depending of their level of privilege. For example, in the case of a teacher giving a class, the teacher should be able to navigate through his slides with a navigation bar, but the students should not be able to change the navigation during the lecture. In this case, the system would hide the navigation bar from the students because they don't belong to the same privilege level group as the teacher. The system and method thereby introduce a controlled interactivity among participants of a Web session since some users receive only partial views of the document.

In collaborative multi-device Web browsing, the decision of which device or which user is going to receive which part of the web content is done dynamically at the beginning of the session using a policy file which, for each XML document, has been written by the Web author upon creation of the document. The policy file contains metadata on the XML Web page, including rules that define multiple privilege groups. Each privilege group has access to a different set of tags. Each user will login into a given group, and will also identify to a proxy via service discovery all of the devices that the user owns. Given all of this information, the proxy can construct an overall mapping of permitted tags to permitted output devices, i.e. each tag that the user is permitted to access is mapped to one or more output devices that the user owns or is permitted to access.

To create the sub-documents sent to the different devices and end users, the Web content is transcoded, preferably using XML. Transformations are applied to select the appropriate tags and produce documents in the appropriate output format, typically HTML, XML, WML, etc., or even a non-text format such as a stream of encoded audio that is to be sent to a speaker. Service discovery is performed to learn about the codec format expected by each device.

The whole process of multi-device Web browsing is done transparently from the user; however, some control is given to the end-user as to where each tag he is allowed to see is going to be displayed. The multi-device Web browsing proxy will send an applet to the user with the list of tags and the choice of devices he has for each of them. The end-user can then personalize the group session by selecting the more convenient association of tags and devices for optimal display at the user's location.

### Brief Description of the Drawings

The invention will now be described in greater detail with specific reference to the appended drawings wherein:
Figure 1 provides a schematic illustration of a typical Web browsing system;
Figure 2 provides a schematic illustration of a Web browsing system in accordance with the present invention;
Figure 3 illustrates the first scenario of collaborative multi-device Web browsing, wherein a single user's Web browsing session is enhanced by utilizing nearby output devices of higher capability;
Figure 4 illustrates the second scenario of collaborative multi-device Web browsing wherein other users, in addition to other devices, receive selected portions of the output of a browsing session;
Figure 5 illustrates efficiencies of data transfer in accordance with the present invention;
Figure 6 schematically illustrates the entities involved in establishment of a new collaborative session;
Figure 7 depicts the overall sequence of interactions for the present invention;
Figures 8A and 8B detail the process flow for the establishment of a new collaborative session;
Figure 9 is a representative algorithm for a proxy to determine when a URL request for a Web page should result in establishing a new browsing session;
Figure 10 illustrates a representative login/registration screen which is sent to a session originator's browser from the proxy; and
Figure 11 provides a representative process flow for new users and/or devices joining an established session.

### Detailed Description of the Preferred Embodiment

For purposes of the ensuing description, it is assumed that the inventive system and method are being applied to a typical Web browsing application wherein a Web client runs locally on the user's machine and a Web server runs remotely within the Internet. When the user requests a Web page via the Web browser, the request is sent to the appropriate Web server which returns the document directly to the Web browser. The Web browser contains enough intelligence to parse and render the HTML contained in the returned content. The terms "Web page" and "Web document" may be used interchangably, with the content of the Web page or Web document being that which is selectively divided into "portions" or "sub-document" to which access will be selectively controlled. The preferred embodiment of the invention requires the Web documents be created using XML, and the ensuing description assumes the use of XML as the language. It is to be noted that the invention can be applied to documents which are provided in HTML; however, several of the objects of the invention cannot be realized when operating with an HTML document.

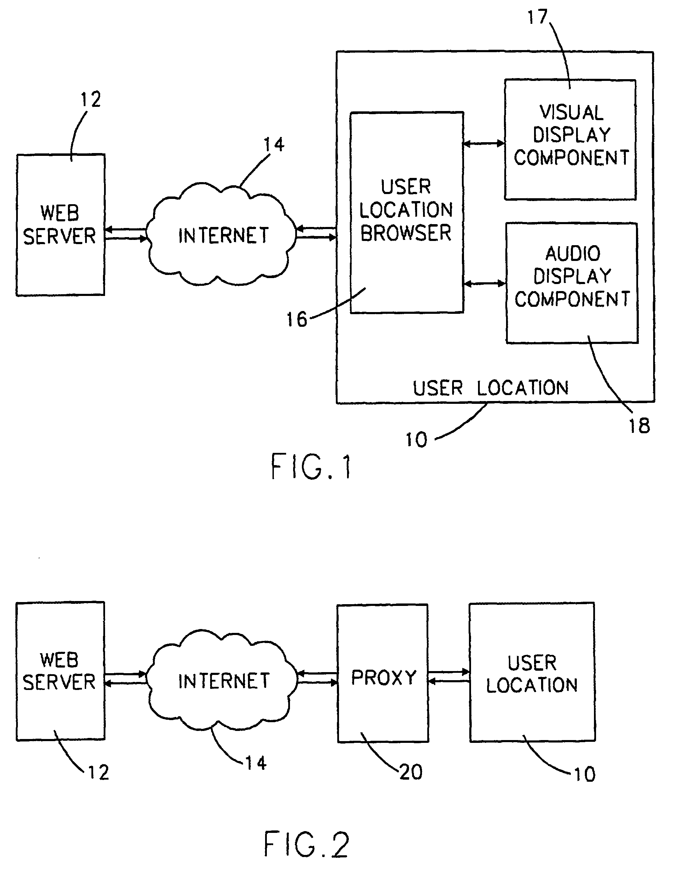

Figure 1 provides a schematic illustration of a typical Web browsing implementation. With reference to Figure 1, a user (not shown) at the user location 10, will obtain content from the Web server 12 via the Internet 14. Once the content has been received at the user location browser 16, it is "delivered" to the user in the form of visual display at a display component 17 and/or audio rendering at the audio display component 18. In a collaborative environment, the model is extended to include not only a plurality of display components at a user location but also a plurality of user locations.

The idea behind the inventive collaborative multi-device Web browsing is to first separate a Web document into independent portions and to then selectively deliver these portions for display. The theme of collaboration applies on several levels. First, when there is only one user that is browsing the Web, the notion of collaboration applies to multiple client devices in close proximity to one another that collaborate to form a virtual machine. Portions of each Web document are separated among multiple client components of this virtual machine that are all located near the requesting device which initiated the Web browsing session. This type of collaborative multi-device Web browsing enriches the single user's Web browsing experience. Second, when there are multiple human users, the notion of collaboration applies across user locations. Consequently, not only can portions of a Web document be served to multiple local devices, but portions of the Web document can also simultaneously be served to multiple users who may be scattered far apart geographically, according to each user's preferences and permissions.

One key prerequisite of collaborative multi-device Web browsing is that both users as well as devices must have some means of registering their services as well as discovering services that have been registered by others. The mechanism for registration and discovery of users and devices requires a service discovery protocol and middleware registry, such as provided by SLP (Service Location Protocol), Jini* from Sun Microsystems*, Bluetooth's* SDP (Service Discovery Protocol), Microsoft*'s UP&P* (Universal Plug and Play), etc. Multiple users may register for a Web browsing session and then follow the session controlled by the session presenter. Each device is also assumed to be able to advertise its capabilities.

Provided to receive the device input regarding capabilities, and to receive and parse Web content, is a proxy entity, as shown at 20 of Figure 2, which is interposed between the Web server 12 and the user location 10. The proxy is adapted to receive input from the Web server in the form of a Web document and input from user locations in the form of user location device capability information. As further detailed below, the proxy utilizes the input information to selectively control access to portions of the Web document in accordance with user access privilege information and device capability information.

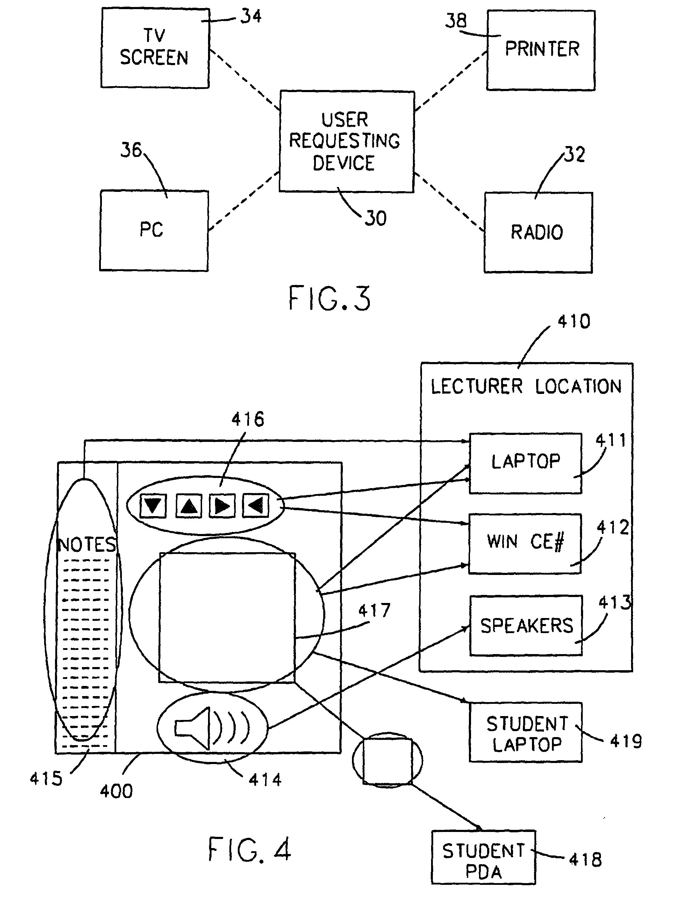

Figure 3 illustrates the first scenario of collaborative multi-device Web browsing, namely the enrichment of a single user's Web browsing session by utilizing nearby output devices of higher capability. The idea is to extend the capabilities of the original device used to do the Web browsing by leveraging off of other nearby output devices to play or display portions of the Web document that the original device cannot effectively support. For example, in a home environment, the user could start browsing the Web from a user requesting device, 30, such as a PDA which has a small screen, low resolution, and possibly no sound support. If there is a high quality speaker, radio 32, and a TV 34 nearby, both equipped for example with a Bluetooth* chip for providing short-range wireless connectivity, then the user could decide to send the sound portion of the Web content to the speaker and the graphical content to the TV screen. The user can continue to use the original PDA as a remote control to navigate through the Web. The ability to extend the capability of a limited mobile device with surrounding I/O peripherals enriches the browsing experience of the user. The user can also control which output data/stream is played/displayed on which output device, such that still images could be sent for display on the monitor of PC 36 or for outputting as hard copy at printer 38, while video images would be sent to TV 34.

Figure 4 illustrates the second scenario of collaborative multi-device Web browsing, namely the enrichment of the Web browsing experience by allowing other users, in addition to other devices, to receive the output of a browsing session. In the scenario depicted in Figure 4, a lecturer has written a Web presentation 400 that is stored on a Web server and desires to show this presentation to other users, perhaps in a telephone conference, conferencing room, or lecture hall. The lecturer may arrive at the lecture location 410, which is already equipped with speakers 413, with a laptop computer 411 and a WinCE* device 412, the latter of which will allow the lecturer to have freedom to roam during the presentation. In this case, the presentation 400, as schematically depicted, comprises the visual display portions 417, the audio display portion 414, a navigation bar 416 and lecturer's notes 415. The navigation bar 416 with forward/back buttons should be sent only to the WinCE device and the lecturer's laptop computer. Simultaneously, the lecturer may wish to have the graphical slides 417 sent to the lecturer's laptop so that they may be projected on to the lecture hall's large screen (not shown). In addition, the lecturer may desire that the audio portion 414 of the presentation be sent to the sound system 413 available in the room. What has been described thus far is identical to the first scenario's virtual machine concept, such that the content of each accessed Web page is split to a single user's computer, PDA, and stereo system. In the diagram of the presentation 400, the notes 415 (left part of the web page), navigation bar 416 (top picture) and slides (central part) 417 all go to the lecturer's laptop. The navigation bar can also be directed to a lecturer's PDA (not shown), in case the lecturer desires a remote control to walk around while giving a presentation. The audio is rerouted to the stereo speakers available in the lecturer's room.

As an extension of the virtual machine scenario, as illustrated, it is assumed that other people in the room (or are remote locations) also have devices and would like to receive part of the presentation on their devices. For example some students in the room may have PDAs 418 and others may have laptops 419. The audience could be sent the slide portion 417 (with a lower resolution transcoded version being sent to the PDAs). While a remotely located student is not illustrated, it is assumed that both the audio and slide portions of the presentation would be provided for access by that student user. The users may have different access privileges in order to control which groups of users are allowed to receive which multimedia objects in a Web page. For example, the lecturer has a higher privilege than people in the room. The lecturer is allowed to receive the notes and the navigation bar. In contrast, the audience members are not allowed to interrupt the presentation by playing with the navigation bar, and therefore are not allowed to receive the navigation bar portion of the Web document. Therefore, under this scenario, a given object (e.g. navigation bar) may have multiple destinations; multiple objects may have the same destination (e.g., the lecturer's computer); and, a user may own/control multiple output devices (e.g., computer, PDA, stereo speaker). The foregoing lecturer/student scenario applies equally well to any conferencing scenario. For example, a typical telephone conference may be enhanced by allowing attendees to also join a concurrent Web session in which the speaker moves through different slides while speaking, and the other attendees follow the online graphical presentation, though only the portion that they are privileged to receive.

To enable the foregoing, the session presenter first composes a slide presentation (in a step referred to as "Web authoring") and stores the sequence of slides as XML Web pages in a Web server. As part of the authoring, the composer may also optionally create an XML "policy" file. The policy file contains the mapping rules that dictate which XML tags are allowed to be sent to which privilege groups. Later, when the session presenter wishes to access a Web slide as part of a collaborative presentation, the session presenter will download the first page of the presentation. The first page of the presentation is intercepted by the proxy. If the first page references a policy file, then the proxy requests the policy file and constructs well-formed tag mapping rules. In the absence of a policy file, the proxy is forced to generate a set of default sub optimal mapping rules. At this point, the proxy creates the state for a collaborative multi-device Web browsing session that permits other users to follow the session presenter's browsing session. The proxy registers this new session with a service discovery mechanism so that new subscribers can find the session.

When a new potential subscriber wishes to join an established session, that subscriber will first query the service discovery mechanism, which returns the list of available services. When the subscriber selects the desired collaborative multi-device browsing session, a login form is returned to the subscriber from the selected proxy asking for a username and password. By matching the given password to a password defined in the policy file, the proxy associates a privilege group with each new subscriber. Also, the proxy requests from service discovery all devices associated with the entered username. At this point, the proxy can construct mapping rules that select only the XML tags that should be sent to an individual subscriber's devices. The proxy constructs the appropriate XSL documents that create the various portions or sub-documents that are then pushed to the subscriber and the subscriber's multiple devices. Each subscriber and each device receives a partial view of the Web presentation. The data push mechanism will vary depending on how data push is supported in the subscriber's browser. If the endpoint is a device rather than a browser, then data push will vary depending on the method needed to access the physical device. Finally, since a subscriber may wish to change the proxy's initial mapping of multimedia tags/objects to output devices, then the proxy is allowed to build a personalized configuration applet which the user can invoke at any time to customize the mappings. The proxy uses these customized mappings to establish the final policy of tag/multimedia distribution.

### The Proxy

The basic components of the proxy include at least one communications component, for receiving user requests and forwarding those requests to the Web server and for communicating with user locations during service discovery (which may be a local or distributed function, as further detailed below), at least one processing component for parsing documents fetched from the Web server, as well as at least one processing component for interpreting policy files, a processing component for dynamically mapping document portions to user locations, and at least one cache location for caching pre-fetched files. If the documents are provided in XML, it is optimal to do this parsing using XSL files, which requires an XML parser and an XSL engine. There are many XSL processors available to do the conversion, the details of which are well-known and will not be repeated herein. The proxy may additionally include a component for transcoding all or portions of the Web document to "customize" the delivered content to the capabilities at the user location.

The proxy can be located anywhere in the system (including in the Web server or at the user location); however, it is optimal to put the intelligence in a proxy which is located between the end user and the web server. The proxy could be an available proxy, such as the Apache* proxy, customized to perform the multi-device, multi-user selective processing. Alternatively, the proxy could be implemented as a web server with servlet. Indeed, the multi-device proxy looks like a web server to the end-clients, since it creates the documents that have to be sent and distributes them to the destination. Therefore, the servlet could take care of forwarding the requests to the Internet web server, receiving the replies, and doing the parsing. The web server part would retrieve the documents cached by the servlet to distribute them to the end-devices.

In addition to the parsing and access control functions of the proxy, there are several other advantages to using an intermediate proxy. The proxy hides the end-devices from the Internet, so that is can access devices locally, such as speakers which don't necessarily have an IP address. In addition, the proxy acts as a buffer between the Internet and the end-devices. For example, in the case of an audio component being streamed, the fluctuation of the network delay makes the stream stop and restart. The proxy can buffer the data and stream it more smoothly and regularly to the end-device. Yet another advantage to the use of a proxy is that the proxy avoids having to run anything at the client end, which is desirable because the end-device could be small and have limited capabilities. Proxy-applied transcoding functions can be applied to the web content to make it suitable for delivery to certain devices. For example, Palm Pilot*s support only 2-bit greyscale pictures; so a transcoding of the images could be applied at the proxy before their delivery to the end-device.

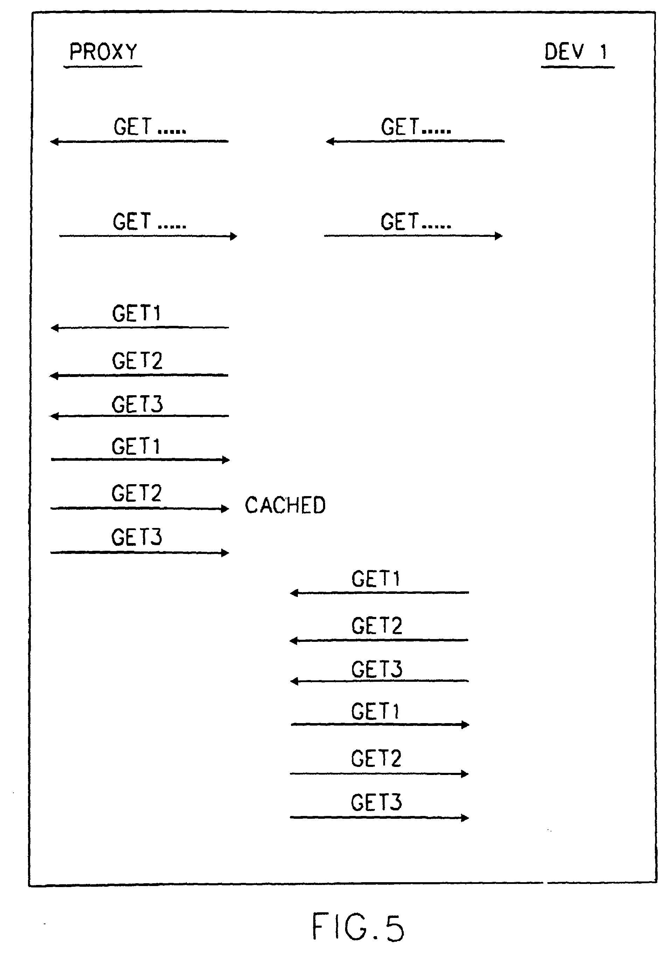

The proxy also behaves like a browser, in that it will fetch additional files needed (e.g., images, audio files, etc.) without waiting for an end-user to request them. All of the end-devices which receive the web page are expected to query for additional files; therefore, it is beneficial to have the proxy query them once from the web server, cache them, and serve them to the requesting end-devices. Figure 5 illustrates the foregoing efficiencies of data transfer in accordance with the present invention.

As shown in Figure 5, the device Dev 1 initiates the query of a web document. The proxy forwards this request but when the reply from the web server comes back, the proxy parses the file and queries images, sound files, etc., just as a browser would have done. When the query for those images, sound files, etc. comes from the end device, therefore, the proxy can just return the document it had cached. The proxy fetch and cache approach also solves the problem for non-browser end-devices. For example, the user could have chosen to send the images to the TV screen, however since the TV screen expects binary data, the proxy has to fetch the images contained in the XML file on behalf of the TV screen. If this is the default behavior of the proxy, the proxy just needs to know how it should send the data to the TV screen.

### Service Discovery

Collaborative multi-device Web browsing requires a service discovery mechanism for two reasons: first, the proxy must have some means of discovering registered users as well as their registered devices, in order for the proxy to be able to split the multimedia session to multiple end devices; second, users and their devices must have some means of discovering registered proxies, so that the users can establish or join a browsing session. The mechanism for registration and discovery of users, devices, and proxies requires a service discovery protocol. There are many available service discovery protocols which can be used in the inventive system, including Jini* of Sun Microsystems*, SLP*, and UP&P* of Microsoft*. As these are well-known protocols, the specifics of the service discovery protocols need not be detailed herein.

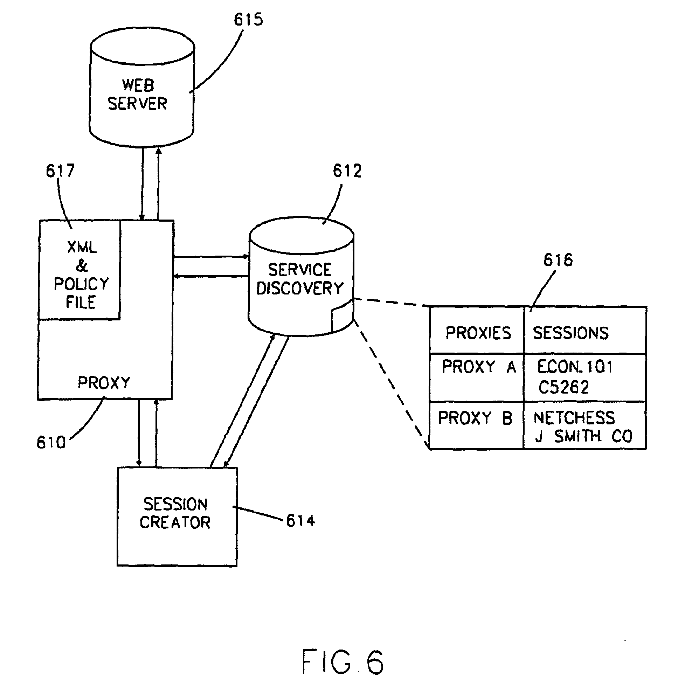

As shown in Figure 6, service discovery and registration are employed by collaborative multi-device Web browsing in both the session establishment phase, as well as the session joining phase. In the session establishment phase, there are a series of interactions between the proxy and service discovery. The service discovery may be a local component of a proxy, may be distributed among a plurality of sites, or may be found at a centralized location. In a first step the proxy 610 registers itself to service discovery 612 so that a client (i.e., the session creator 614) can later find the proxy. Similarly, a user/session creator registers each device owned by that user with the service discovery. The user registration may be done at the time of establishment of the session, or may have occurred at an earlier time and be updated, as needed, based on the user device availability at the time of session establishment.

Next, the session creator 614 clicks on the desired proxy's hyperlink, or otherwise initiates the Web interaction. The session creator's system may be configured such that the session creator is accessing the proxy simply by attempting to connect to the Web, such that the invocation of the proxy is transparent to the user. In the latter case, upon initiating the Web interaction, the session creator's system queries service discovery to find registered proxies and a proxy is selected and contacted. Once contacted, the proxy 610 returns a session login menu requesting the session name and URL of the first XML Web page. Thereafter, the proxy pulls the requested XML page and its associated policy file 617 from the Web server 615. The proxy parses the XML page and policy file to create privilege groups and then sends a login menu to the session creator requesting username and password. After having matched the user to a privilege group, the proxy announces the new session to service discovery and requests any devices registered by the session creator. Finally, the part of the requested XML page which the session creator is permitted to receive is returned to the session creator.

In the session joining phase, where existing sessions have already been established, there are three interactions between the proxy/user and service discovery: first, a new user or subscriber registers its devices with service discovery; second, the subscriber requests a list of ongoing browsing sessions from service discovery; third, the proxy requests all registered devices associated with the new subscriber from service discovery. The table at 616 provides a sample record which may be maintained by the service discovery component for registering proxies and sessions.

The above interactions between the inventive system and method and existing service discovery can be reduced into two operations: register() and query(). Existing service discovery protocols can register() proxies and browsing sessions, as well as users and their devices. In addition, the service discovery can return, in response to a query(), a list of registered proxies and/or sessions, or a list of registered users along with the devices associated with each user. Whether the service discovery's registry is centralized or distributed, or whether registered proxies/session are only for a local area or are available in the wide area are factors which can be determined by the selected service discovery protocol and which will not change the inventive system and method. Of course, wide area support will extend the capabilities of the proxy to provide remote wide area collaboration, e.g. distance learning with remote students.

The interface into service discovery may differ depending on whether the client or proxy is interacting with the service discovery. The proxy will not require any visual interface with service discovery, such that a simple procedural API will do. In contrast, the end user on the client could very well have a graphical UI or browser-type interface into service discovery. The details of the interaction between the client and service discovery are, again, beyond the scope of the present invention. What is necessary is that such an interaction exists and is able to register client devices as well as return the listed proxy and/or sessions to the client.

### Update Data Delivery

Every time there is some updated data, the data should be pushed to all the browsers and to the devices, like speakers or TV screens, so that everybody is synchronized in what they see. However, modification should not be necessary at the client side nor should any program have to run to make the multi-device web browsing work. Part of the reason is that some devices, like Palm Pilot*, are not multi-threaded so that a daemon cannot be run on those devices. Therefore, it is preferable to try to use only the current features of web browsers to push the data to them. One of two approaches could be used to send data to the end browser, either server push or client pull. In server push, the server sends down a chunk of data; the browser display the data but leaves the connection open; and, whenever the server wants, it sends more data and the browser displays it, leaving the connection open. In contrast, in client pull, the server sends down a chunk of data, including a directive (in the HTTP response or the document header) that says "reload this data in 5 seconds", or "go load this other URL in 10 seconds". After the specified amount of time has elapsed, the client does what it was told (i.e., either reloading the current data or getting new data).

The major advantage of server push over client pull is that the server has total control over when and how often new data is sent down. Also, this method can be more efficient, since new HTTP connections don't have to be opened all the time. The downside is that the open connection consumes a resource on the server side while it's open. Unfortunately, all the flavors of browsers don't have the same characteristics, for example, Netscape* and IE* don't use the same techniques to implement server push or client pull. For example, to do server push (which allows a server to push data to a browser), Netscape relies on a specific mime-type called "multipart/mixed", which lets a single message (or HTTP response) contain many data items. The different parts of the data pushed are separated by a defined delimiter string. But IE browsers don't use the mime-types so the invention cannot use this method to push data to them. As for IE pocket used in WinCE* devices, they don't implement the full http specification or support javascripts which could allow us to use a client pull technique.

Therefore, given the diversity of supported features, what is needed is a different way to push the data for each browser type (at least for the most common ones). The following solutions apply. For Netscape*, if the proxy finds that a client is running Netscape, it could decide to use a server push or a client pull model. With the server push model, a permanent link is opened between the proxy and the web browser at the client's device. The link is opened when the end-browser receives a mime-type=multipart/mixed in the http header. Then, data can be pushed to the web browser through this pipe. The following code provides an example:
*Content-type: multipart/mixed;boundary=DelimitorString*
*--DelimitorString*
   *Content-type: text/plain*
*Data for the first object.*
*--DelimitorString*
   *Content-type: image/gif*
*Data for the second and last object.*
*--DelimitorString--*
In this example, the permanent link is created when the client browser receives the message with the Content-type multipart/mixed. The attribute boundary specifies the string that will be used to delimitate the chunks of data being pushed by the server. So, when the server wants to send data to the client, it delimits the data with the boundary string and defines the data type with the header Content-type.

The client pull method would be done using a javascript or a special http header called Refresh that allow to reload a web page periodically. Therefore, if the document has changed at the proxy, the new content would be displayed at regular time intervals. The special http header looks like: Refresh: 3 The same web page is refreshed every 3 seconds.

If the end client is running IE, only a client pull model can be used since server push is not supported by the current version of IE. Therefore, the client browser will have to regularly query the proxy to get the updates (using javascript or the http Refresh header).

Yet another alternate solution for Netscape and IE is to use an applet which will listen for notification from the proxy and tell the browser to show a document with the url sent by the proxy. This approach is a hidden client pull which is made more flexible by the presence of the applet which is notified of when new data is available. In this way, the page is not going to be refreshed at regular instants but only when new data is available. The same thing could be done with a Netscape plug-in for Netscape or a Microsoft Active X* component for IE.

If the client is running pocket IE (WinCE devices), there is no obvious way to push data to it because it doesn't run a full version of HTTP and doesn't understand the Refresh HTTP header, doesn't understand javascript or java, and doesn't support server push. The solution could then be to use a feature called HTML viewer control that provides an API to display HTML documents. In such a system, a program able to receive data from the proxy (using sockets) can be written and one can use the HTML viewer API to display the HTML document.

### The Collaboration Process

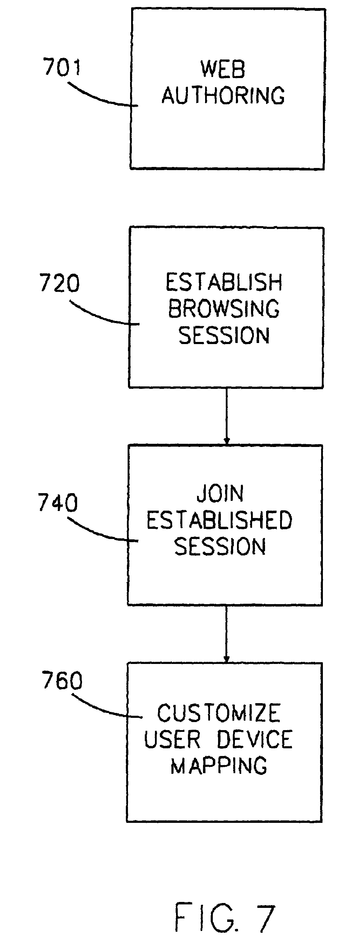

The specific sequence of steps required for devices and users to collaborate using the inventive proxy-based solution will now be described. Generally speaking, the process depicted in Figure 7 outlines how the proxy builds a set of rules that map XML tags in a Web page to different output devices for each user. For conceptual clarity, the normal operation of a collaborative multi-device Web browsing session can be divided into four phases. In the first step, the Web page must be pre-authored in XML, as shown in step 701. The Web authoring step may additionally include creating of an XML policy file to aid collaboration among multiple users (the policy file contains the default rules that map tags to privilege groups). After Web authoring, a browsing session must then be established at the proxy, as shown at 720, by a user requesting the aforementioned XML Web page and policy file, if any. Next, a new potential subscriber may join an already established browsing session by logging into the session and identifying the privilege group to which they belong, as depicted at step 740. Finally, after joining an established session, the subscriber may customize the rules, at 760, that map XML tags to the end devices that the subscriber owns or has permission to access. Each of the foregoing steps will now be described in greater detail.

### Web Authoring

Collaborative multi-device Web browsing requires the author of the Web site to create multiple XML-related documents in the Web authoring step, 701 of Figure 7, including the XML Web page, its accompanying XSL document, and an optional, though highly beneficial, policy document. The traditional language used for writing web pages is HTML. HTML is a standardized markup language which describes the formatting of the components of the web page. Generic tags are used, regardless of the content of the web page, which makes it hard for a human to read and understand an HTML source. The HTML tags have a formatting meaning but no content meaning as part of the web document. As a result, HTML is not well suited for the present invention. While there is an effort to try to make HTML more flexible and richer, by using scripts like javascript or Microsoft Jscript, the current HTML cannot provide the capability for a Web author to create a policy file. That is not to say that the present invention cannot be applied to a document created using HTML. In fact, an HTML document can be split into document portions for delivery of portions of content at different user devices using the present invention. The aspect of splitting a document and selectively delivering content to users belonging to different privilege groups based on a policy file is, however, not readily implemented with an HTML document.

Alternatively, XML is a language in which the author makes up the tags he needs as he develops his document. XML describes semantics, not formatting, with the formatting being added to the document with a style sheet which can be written in XSL or CSS. It is preferable to rely on XML as the authoring language for the Web content for implementing the present invention. The web community is aware of the limitations of HTML to develop rich web content, which is why there is an effort to try to start the transition to XML as a markup language. W3 propositions like XHTML present a way to define compatibility between HTML and XML. In addition, lots of web servers are already storing the web content as XML documents but converting them into HTML before sending them to the end user.

XML is very suitable for implementing the present invention due to its flexibility. Since every author defines his own tags and his own components, it is much easier to split the resulting document into independent components that can be sent to selected devices. It is optimal that each uniquely named tag on a page have its own demultiplexing policy describing the output devices to which the tag may be delivered. XML provides the capability to uniquely define the name of each tag, and XSL can define the usage of each tag. Furthermore, an XSL document is also needed by an XML-enabled browser to transform the customized XML into a language that a browser can render. It is assumed that this XSL document will define the transformation from XML to HTML (or another markup language, if needed), which will ensure that even if a proxy is not used between the server and the browser, an non-XML-enabled browser could to process the Web document.

Consider the following example of the XML Web page for the slide presentation shown in Figure 4. Recall that there were four components to that Web page: navigation buttons; graphical slides, private notes; and audio. The XML file used to describe the non-audio components of such a page could look like the following: 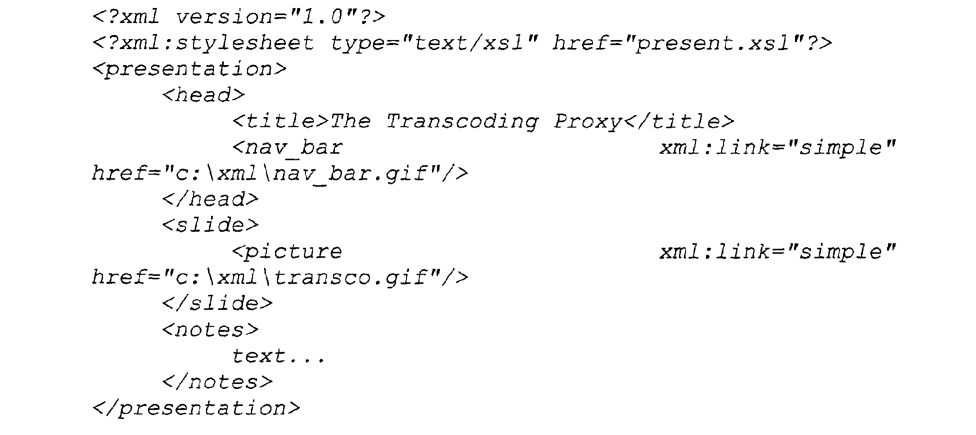 The document has a header portion with a title (tag *<title>*) and a navigation bar (tag <*nav_bar*>) and two body portions containing the slide (tag *<picture>)* and private notes (tag *<notes>).*

In addition to those two files (XML and XSL), the author may optionally write a policy file that defines mapping rules governing which XML tags should be distributed to which privilege groups and which devices. The great benefit provided by a policy file is the ability to control who sees what in a Web presentation. The policy file defines privilege groups, and then defines what subset of XML tags each privilege group is permitted to receive. The author can use the policy file to limit certain groups to receiving only a partial view of the Web presentation, while granting full access privilege to other subscribers to a session.

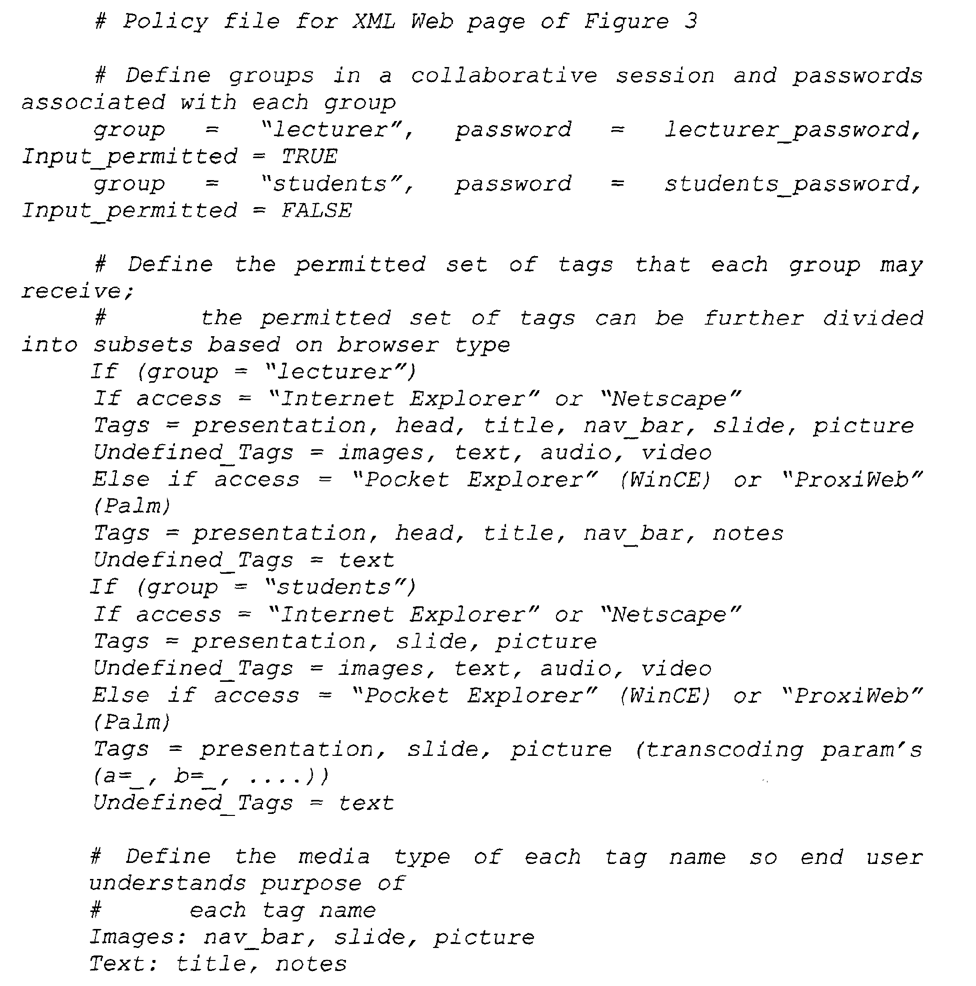

The key responsibility of the policy file is the definition of privilege groups. The idea behind privilege groups is to provide a mechanism for differentiating the access privileges of participants in a collaborative browsing session. A session can offer differing partial views of a Web browsing session to different privilege groups. The author of a Web page that is to be presented to multiple users in a browsing session may wish to give some user groups higher or lower privileges to access certain XML tags than other groups. In the example above, the policy file permits a lecturer who is presenting a college class on-line to students via the collaborative proxy to limit students to seeing only a subset of the tags on each presented Web page, i.e. the lecturer prevents the students from seeing private reminder notes (<notes> tag is not available to students), and prevents the students from accessing the navigation controls to the lecture (<nav_bar> tag is not available to students).

While the policy file may be part of the XML document, it is preferable that the policy file be a second file separate from the XML Web page that references the policy file. The use of a separate file allows multiple Web pages to reference the same policy file. For example, this may be helpful to an author composing a Web slide presentation who wishes to define the same set of privilege groups over all Web pages, but does not wish to rewrite a new policy file for each page. Instead, the author writes a single policy file that is referenced by each page in the presentation. All pages referencing the same policy file share the same privilege groups. The author aggregates all XML tags that will be encountered while traversing the multiple pages in the presentation into the single policy file. An alternative to a separate policy file would be to embed the policy file's information into each XML page. However, separating the policy file metadata information into a unique file makes it easier for the author to update privilege groups; the author simply changes the one policy file that is referenced by each Web page, without having to edit each Web page containing the same embedded definition of the same privilege groups.

An example policy file, developed for the example XML page described above, is shown below. The policy file would be structured as an XML document. Within this document, a namespace is defined to standardize the tags and values used in those policy files. In the following, the namespace prefix cmdb (collaborative multi-device browsing) is introduced. The XML policy file corresponding to the earlier example would be as follows:

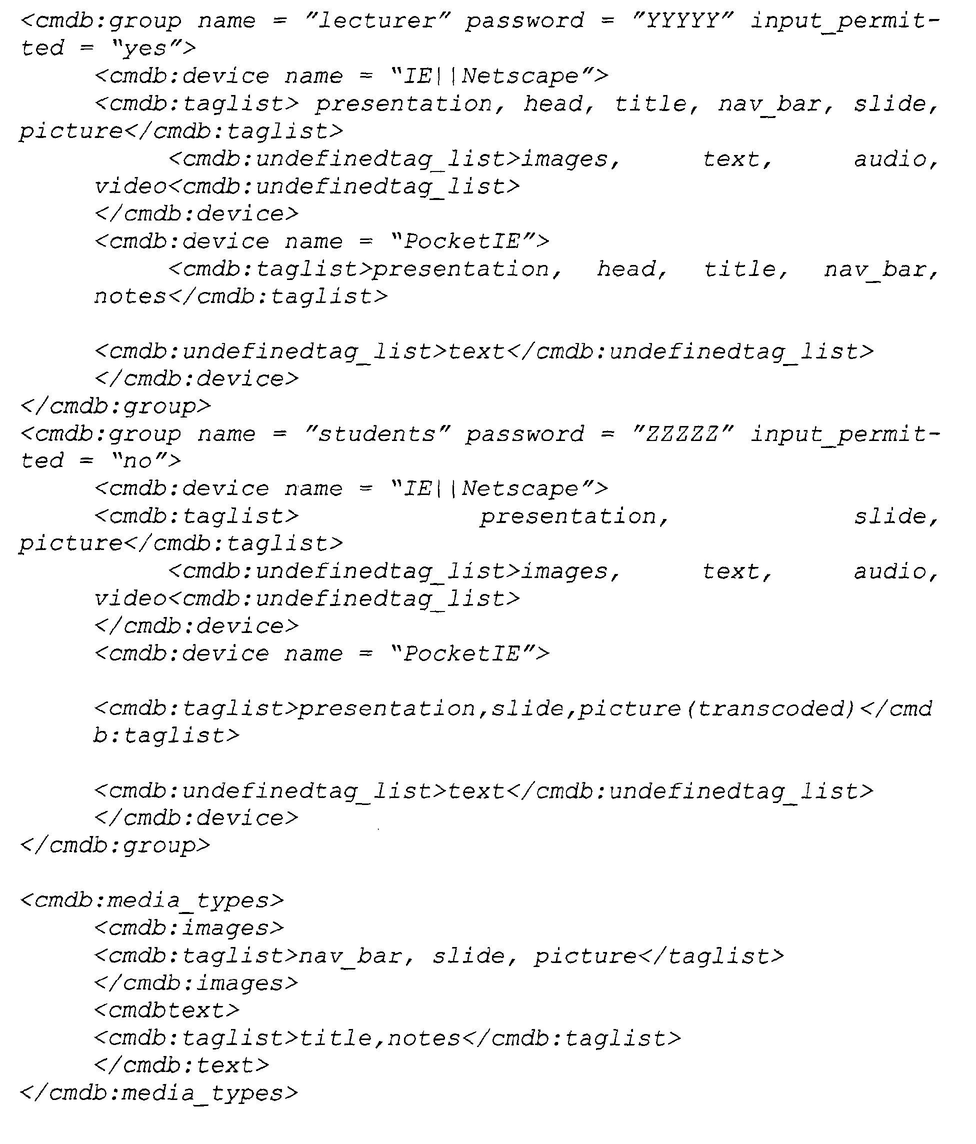

A schema needs to be defined standardizing the tags and the attributes that the author should use in the policy file. The value used for some of the attributes should also be standardized. For example, it is important that all authors use the standard tag name "group" in order that every collaborative multi-device proxy understand that a privilege group is being defined. The sample XML policy file includes the following proposed standard tag names: group, device, taglist, undefinedtag_list, media_types, images, and text (video and audio not shown). In addition, each tag has its own unique attributes, e.g. the group tag has the attributes "name", "password", and "input_permitted". Finally, while the value of the attributes "name" and "password" need not be standardized, the values of certain attributes must be standardized so that the proxy can universally understand what is meant by the author, e.g. input permitted must have standardized values set to either "yes" or "no" (otherwise different authors will use true/false, on/off, 1/0, etc). There could be some degree of freedom for well known names, i.e. the proxy could understand that <device name="InternetExplorer"> refers to the device attribute IE. However, for other end devices this could be harder. Consequently, it is preferable to agree on a common terminology to refer to devices. This vocabulary can be specified at any time and will, of course, be extensible.

An attribute capability in the device tag can also be introduced to let the author specify special requirements regarding the capabilities of the content output device. For example, *<cmdb:device capability="sound_card">* could be used, with the meaning that the following set of tags can be sent for any device that has a sound card. It is even more crucial here to standardize the values of the capability attributes so that the proxy can match them with what it retrieves from service discovery. The proxy will learn the capabilities of the devices from the various attributes registered in the service discovery database for each device. But if there's no standard way to describe the capabilities, the proxy cannot take advantage of this information. Therefore, the devices must use the same vocabulary as the author to list their capabilities with service discovery. The W3C draft "Composite Capability/Preference Profiles (CC/PP)" has tried to come up with a global standardization of the characteristics of devices which may make this aspect of the invention even easier to implement in the future.

It is assumed that the initial policy file associated with the first XML page downloaded by the session into the proxy (or which is a part of the XML page) defines the privilege groups and, hence, the tag mapping rules observed throughout the session. Though other pages with different policy files may be encountered, the privilege groups and tag mapping rules defined by the initial policy file overrule any subsequent policy files. For the following discussion on undefined tags, it is assumed that a browsing session has already been established and that there is an initial policy file downloaded along with the first XML page of the session.

The policy file's *Undefined_Tags* variable tells the proxy where to send unknown XML tags in case a lecturer, or session presenter, accesses a Web page whose tags are not defined within the policy file referenced by the first Web page that established a collaborative browsing session. Limiting the session presenter to access only Web pages that conform to the initial policy file's definitions would be too restrictive. Instead, it is desirable to allow the session presenter to have the freedom to browse Web sites outside of the scope of the initial Web page's policy file. For example, a lecturer who is presenting a slide show to a Web audience may wish to show slides not only from the prepared lecture, but also Web pages from outside of the prepared lecture for demonstration purposes. In such a scenario, the session presenter visits a Web page that has no pre-defined policy file, e.g. a commercial Web site like CNN that is oblivious to collaborative Web browsing, and also visits two other Web pages that have policy files PF' and PF'' that are different from the initial policy file PF.

A user can also establish a collaborative browsing session without ever accessing any Web pages with policy files. In this case, the intent is to support the common scenario in which a group of people may wish to browse together, but are not interested in formally defining privilege groups of different subsets of users. However, when the session presenter needs a method to more formally control what different groups see, then policy files provide the means to provide partial views of the same Web material.

As a consequence of permitting access to Web pages outside of the scope of the initial policy file, the proxy will encounter unfamiliar XML tags that were not defined in the initial policy file. To handle undefined tags, the concept of the Undefined_Tags variable is introduced. An Undefined Tags variable instructs the proxy where to send undefined tags. When the proxy encounters an undefined tag, the proxy switches that tag based on its media or MIME type, since it is not possible to switch based on the unknown name of the tag. A section media-type is included in the policy file for this purpose. The author lists which tags belongs to which media type, which is how the proxy is going to learn which tag is from which media-type. In the example above, the policy file tells the proxy to send undefined tags of type text, images, audio, and video to lecturers and students using a PC-based browser for access, and to only send undefined tags of type text to lecturers and students using a PDA-based browser for access. Accessing a page whose tag names are not defined by the policy file will result in a less than optimal presentation of the page.

The same policy file may be referenced by multiple Web pages. A session presenter may author a sequence of Web slides for presentation, such that the starting page in the slide sequence will contain a reference to a policy file that will apply to all subsequent pages accessed in the presentation. Each ensuing page to be accessed in the presentation will reference the same policy file. A policy file referenced by multiple Web pages should contain as complete a list as possible of all tags that will be encountered during the browsing session. Any undefined tags omitted in error from the policy file will be caught by the Undefined_Tags mechanism discussed earlier, resulting in sub optimal presentation.

Since the policy file contains a superset of tag names, then individual Web pages covered by the policy file may use different subsets of the listed tag names, and can therefore have different appearances. In the content of the on-going example, the next slide in the presentation may either reuse the same tag names of previously defined pages, or use a different subset of tag names, thereby resulting in a different look-and-feel.

One reason for extending the scope of a policy file to apply to multiple Web pages is to simplify customization. If each Web page uses a different set of tags, but the same set of privilege groups, then the end user would have to request or create new mappings as each page is downloaded. By aggregating all tags in a session into a single policy file, then an end user would be able to customize the layout of the lecture earlier in the presentation. Since different pages may still use different tags, then there needs to be a mechanism to group tags by page within the aggregate policy file, so that the end user can figure out which tags belong to which page of the presentation.

It is possible that, although a user may have the privilege to access a specific XML tag, the user may not have an output device capable of processing that XML tag. For example, if a user accesses a collaborative browsing session with only a PDA that lacks a loudspeaker, and the user has permission to access a tag called <audio_music>, then the user won't be able to actually take advantage of <audio_music> because of hardware limitations.

### Establishing a Collaborative Session

Referring to step 720 of Figure 7, a new collaborative browsing session is typically established when a policy file is downloaded into the proxy, though it is possible to establish a session without a policy file. The added benefit of the policy file is to enable the definition of different groups of subscribers, called privilege groups, within a collaborative browsing session so that the proxy can selectively send different subsets of XML tags to the different privilege groups. Each new subscriber then joins an established collaborative browsing session by providing a login password. This password associates that subscriber with a privilege group defined in the policy file. It is assumed that the password is given to the user in advance by some out-of-band mechanism like email. Depending upon the level of privilege desired in the collaborative browsing session, some or all of the policy file may be encrypted. For the example above, the policy file defines two privilege groups, "lecturer" and "students", defines the passwords associated with each group, and defines the tags that each group is permitted to receive. In the absence of a policy file, called a null policy file, the proxy is forced to construct default mapping rules that may not match the author's desires.

Following a correct login, the proxy consults the policy file to see which XML tags each privilege group, and hence each correctly logged in subscriber within a group, is permitted to receive. Within each privilege group, the mapping rules governing where XML tags may be sent can be further refined based on the user's output device/browser. The policy file also identifies the media type of each XML tag, which enables the end user to understand the purpose of each uniquely named XML tag (image, audio, etc). As discussed later, a per-tag media identification helps an end user who is seeking to customize the mapping rules of tags to output devices. The foregoing enables the author to more flexibly construct the default tag mapping rules so as to anticipate various common scenarios. In the example above, the author of the Web page may envision that a lecturer who will be presenting slides via the lecturer's laptop on a large projection screen in a classroom would prefer to walk around and remotely control the presentation via the lecturer's wireless PDA. In this case, the above policy file specifies default rules such that the private notes will not be sent to the laptop, but instead will be sent to the PDA, so that the lecturer can consult the notes from any point in the room while giving the lecture. As a second example, suppose that there are two students that are not located in the lecturer's classroom, but are following the lecturer's session remotely. One student is following the session via a browser on a connected laptop, while another student is following the lecture via a connected PDA, perhaps a clamtop WinCE* device or a wireless PDA. In the example above, the policy file specifies default rules such that only the title and graphical slide will be sent to the student with a laptop browser, while only the title and transcoded graphical slide will be sent to the student with the PDA. Specific default transcoding parameters are also provided by the author.

In order to determine whether or not an XML Web page has an accompanying policy file, the proxy must parse the XML page that has been retrieved. If the proxy finds a reference to the policy file, then the proxy must fetch the policy file. The policy file may have its own URI with its own MIME type, perhaps text/policy_file, which triggers the proxy to fetch the extra file just as it would an image.

One approach for embedding the reference to the policy file is to follow the same way a stylesheet document is referenced from XML. An XML document indicates which stylesheet to use with the following type of processing information:
*<?xml:stylesheet type="text/xsl" href="present.xsl"?>*

In the same way, a processing instruction could be used such as:
*<?xml-cmdb href = "location of policy file"?>*
The multi-device web browsing proxy would then recognize this instruction and would retrieve the file located at the address specified in the href attribute.

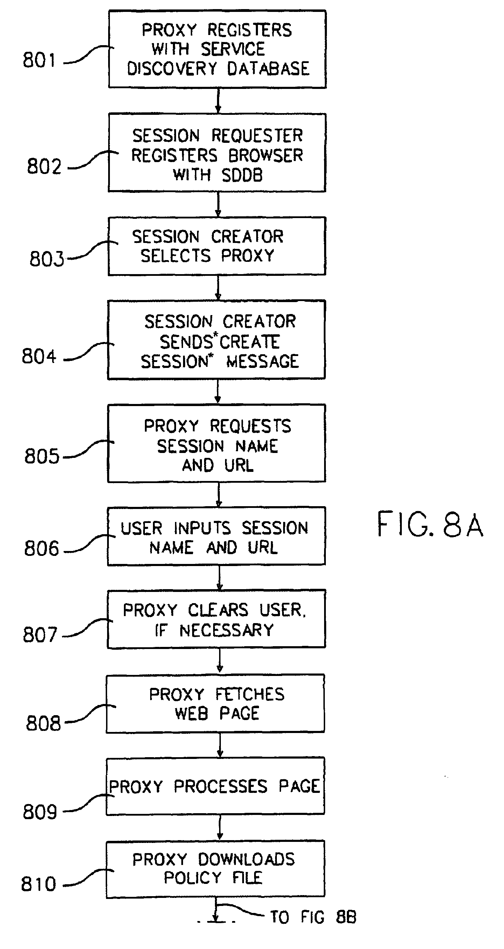

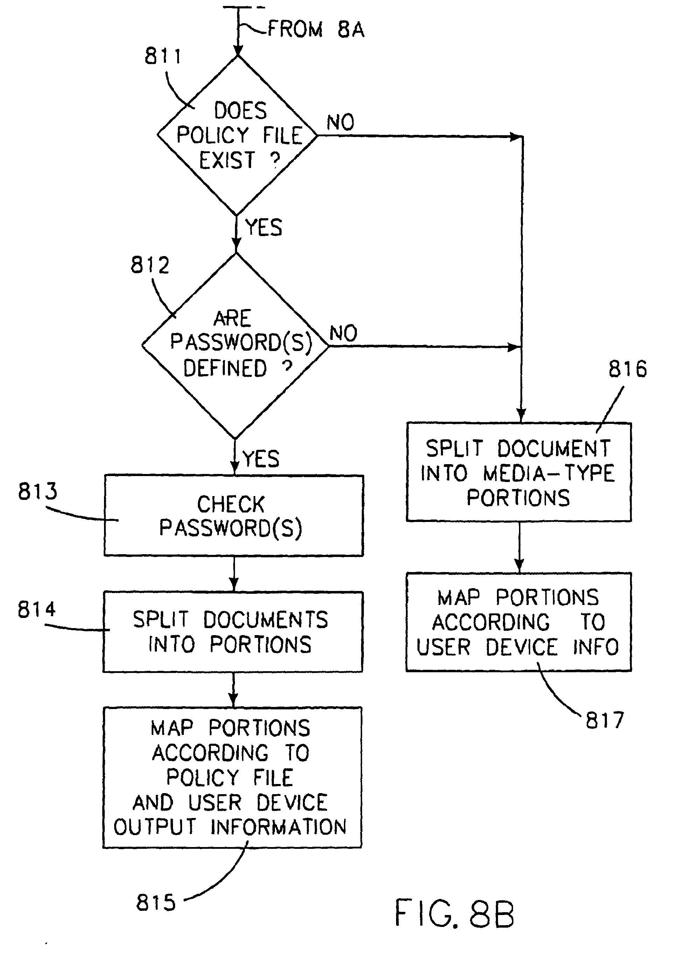

The third stage, 740 of Figure 7 is establishment of the browsing session within the proxy as triggered by a request for an XML Web page. As shown in Figure 8, there are ten steps to the process flow for establishing a collaborative multi-device Web browsing session within the proxy. At step 801, the proxy registers itself to the service discovery database. Once the proxy is up and running, the proxy registers its name and its IP network address via a service discovery protocol to what is conceptually called a service discovery database (SDDB). The service discovery protocol must be able to: (1) register proxies and register each browsing session within each proxy; (2) register devices along with the owner of each device; and (3) respond to queries regarding what proxies, sessions, and user devices have already registered themselves in the SDDB. Conceptually, the service discovery protocol essentially performs as a database that is both written to as well as queried. However, the details of which service discovery protocol is used and how that service discovery protocol implements its SDDB are not critical to implementation of the present invention. For example, as mentioned above, the SDDB may be implemented as a centralized database registry or as a distributed database registration scheme.

The next step, at 802 of Figure 8, comprises the session creator registering its browser to the service discovery database. The session creator sends a registration message to the SDDB requesting that the originator's browser-capable computer be registered to the SDDB. Registration of a device (in this case, the originator's computer) entails providing the device's IP address, device's name, device owner's name, the media decoding capabilities of the device (MPEG video, .wav*, MP3*, RealVideo*, WindowsMedia*, JPEG*, GIF*, HTML 4.0, XML, etc.) and the device's access mode (the protocol with which to communicate to the device, analogous to a device driver). The registration message also contains a request for a list of all registered proxies and their registered sessions.

After registration, the session creator selects the proxy on which to create the browsing session at 803 and sends a "create session" message to the proxy at step 804. Specifically, after registering the browser-capable computer, the SDDB returns a reply to the session creator containing the list of available proxies and their ongoing sessions. This list should be written such that a simple hypertext interface can be provided to the session creator, who can then manually click on the proxy to which the session creator wants to connect. The link would point to a predefined web page provided by the proxy when it registered itself with SDDB. It would be a new session establishment form, such that when the user clicks on the proxy name, a request for this predefined form is sent to the proxy which then returns the document to the session creator. Thanks to this form, the user will be able to create a new web browsing session. If the browser supports automatic updating of the proxy fields, it would be also useful if the click on the proxy name could redirect the browser so that it points to the desired proxy (all browser HTTP GET requests are routed through the proxy). However, if the browser does not support automatic redirection, then the session creator must manually transfer the proxy parameters to the browser, i.e. the user must either "Edit Preferences" (Netscape) or edit the "Tool->Internet Options" menu (Internet Explorer) and set the proxy field to the appropriate address and port. At this point, the browser will be properly set up for the next step, namely requesting an XML Web page through the chosen proxy.

Manually involving the user in the choice of the proxy may appear undesirable compared to automated choice of a proxy and automated redirection of the browser. Manual involvement has the advantage of being less complicated to implement, whereas, automatic choice and redirection may impose additional requirements on the service discovery protocol. For example, the registration message to an SDDB incorporates a service discovery request that is interpreted in its simplest form as a broad query for both the registered proxies list and the ongoing sessions list. Given such a broad service discovery request, the SDDB can't tell whether the requesting user is a session creator interested only in the proxy list, or a generic user interested only in subscribing to one of the ongoing browsing sessions. In the case of the subscriber, there must be manual intervention by the subscriber, who must be able to scan the displayed list of ongoing sessions to choose one. Therefore, on the chance that the requesting device's user might be a subscriber, then both lists must be returned by the SDDB and displayed by the service discovery protocol at the requesting device. A user who is a session creator and not a subscriber will be forced to manually select a proxy, even though it is possible to apply automated algorithms to select a proxy. To fully support automated choice of proxies, an additional requirement on the service discovery protocol would be imposed so that it could differentiate between two types of registration requests, one from session originators (requesting only the list of proxies), and the other from subscribers (requesting only the list of browsing sessions). In this way, the SDDB could selectively return just the session list for registering users who are subscribers, and just the proxy list for registering users who are session originators. Consequently, automatic methods (proxy selection and browser redirection) could be separated from manual methods (session selection). The automated mechanism would override and suppress manual display of the received list of available proxies.

In general, the session creator may own and register multiple devices, perhaps a PDA as well as a laptop and a stereo system. The only requirement is that the session creator have at least one browser-capable HTTP device which can initiate a collaborative browsing session by requesting an XML Web page through the proxy. For simplicity of the example, Figure 6 had pictured the session creator with only one device, a laptop capable of supporting a browser.

At 805, the proxy sends a session creation menu to the session creator, requesting the session name and the URL of the first XML Web page of the session. When the session creator selects a proxy and clicks on it, a request is sent to the proxy which returns the new session establishment form. The user specifies the name of the session, the URL of the first web page to be fetched and potentially a password at 806. The password is used in the case the session name has been pre-reserved. Pre-reserving a session name means that the session creator has specified in advance (for example few days in advance) the session name he would use and he has associated with it a password. This association session name-password can then be stored in the collaborative multi-device web browsing proxy by the system administrator, with the goal of protecting the session. In that way, only people who know the pre-stored password can establish a session with this name. This ensures that nobody can create a session with this name which would point to a different web page than the one desired by the presenter. This idea of pre-reserving a session is useful in the case of the slide presentation, not in the case of the home scenario.

When the proxy receives the completed form, it checks at 807 to determine if it has any password for this session name. If yes, the proxy compares the stored password to the one specified by the user. If the user-input password does not match then the request is dropped. If, however, the password is correct or if there was no pre-stored information for this session, the proxy can fetch the Web page from the appropriate Web server, at 808. The proxy remembers the socket and IP address from whence the request came and associates that with the file returned from the Web server.

When the page (XML or HTML) corresponding to the URL specified in the session creation form arrives at the proxy, the proxy needs to process it to establish the session at 809. If it is an HTML document, the session won't have a policy file as mentioned above; so the splitting of document portions which can be done is limited to media-types and there's no ready implementation of different groups of privileges. With the preferred implementation of an XML document, the XML document needs to be parsed to determine what other documents should be fetched. An XSL document typically also needs to be fetched. In addition, the page may contain a reference to a "policy" file, indicating that a policy file needs to be fetched.

If there is a reference to the policy file in the parsed XML page, then the proxy downloads the policy file from the Web server at 810. The proxy will use the policy file to establish rules based on privilege groups that dispatch various components of the Web page to different users and output devices. The proxy will encounter one of the three following scenarios: 1) the policy file is referenced by the Web page and defines passwords for all privilege groups; 2) the policy file is referenced but does not define passwords for some privilege groups; or, 3) the Web page did not contain a reference to a policy file.

Upon accessing the policy file, the proxy only has generic information on groups and what they are each allowed to receive. It has not built any policy for specific users or devices yet. In order to build a complete mapping for each user of permitted XML tags to permitted output devices, the proxy still needs each user to login via password and identify themselves as a member of a given privilege group, and for each user to register their output devices so that the proxy what devices are available to receive Web multimedia (not shown, since this registration may have already occurred).

If a policy file exists, as determined at 811 and it defines passwords for all privilege groups, as determined at 812, then the proxy analyzes the policy file to identify the possible privilege group values and their associated password(s) and permission(s). The policy file enables the controlling of who sees what and which device receives which part of the document. To do so, it defines privilege groups and what subset of XML tags each privilege group is permitted to receive. The policy file may provide further detail that enables tags to be demultiplexed with finer granularity within each privilege group according to the type of access device. So to establish the session, the proxy needs to isolate the privilege group values defined by the author, their associated password if any, and the list of tags permitted for this group. It is by using this information that the proxy will build rules and map what portions of the document can be sent to each subscribing user. Once any passwords have been verified, at 813, the proxy can apply the policy file information for splitting the document into documents portions, at 814, and mapping those portions for delivery, at 815. If the user has specified output devices, the proxy will also "consult" this information as well in mapping the document portions for delivery to the client location(s).

If there is no policy file as determined at 811, then the mapping of tags to users must be generated by the proxy using some heuristic. Since all tags are essentially undefined, then the default will likely be to switch tags based on their media or MIME types. This case is the same as the case of an HTML document being requested by the session creator. Indeed, if an XML document doesn't have a policy file reference, this XML document would have to be transformed into an HTML document with help of the XSL document. Otherwise, no demultiplexing at all can be done since the tags don't mean anything to the proxy. With an HTML document, the only parsing that can be done is based on the media type, such that images or audio can be isolated from the rest of the document and an offer made to the user to send those different media type to different devices. In addition, there can only be one default privilege group in the absence of a policy file and or in the absence of a password for verifying a user's privilege level. Therefore, access to this single privilege group is open, since no password would have been defined. Therefore, any user that joins this session is granted access and will only be able to choose a media-type based splitting of the web content among his devices. The proxy role will then be reduced to splitting the document into media-type document portions, at 816, and mapping those portions for delivery to client output devices according to user device information at 817.

Should a proxy receive an arbitrary URL, the proxy must determine whether or not a new session should be established. The idea is that even after the session creator has established a session, he should be free to browse pages that are not part of the presentation or of the same web site. The difference between two sites or two presentations is the tags used to author those pages, and consequently the policy file they reference. When a user requests an arbitrary Web page or URL from their browser, the proxy needs to determine whether the desired page should be shown within an existing session, or should be shown as the first page in a new session. First, the request could be coming from a session creator who wants to establish a new session. Second, the request could be coming from the leader of an already established session who simply wants to show that Web page within the existing session. Third, the request could be coming from an established session's leader who wants to leave their current session and originate a new session. In particular, the second and the third possibilities are ambiguous and can confuse the proxy. The ambiguity is resolved by the procedure described next.

To decide whether to establish a new session when the proxy receives a request for an arbitrary Web page, the proxy employs a procedure based on comparing policy files. If the policy file of the requested Web page matches the initial policy file of the first Web page used to establish a session, then the proxy shows that Web page within the same browsing session. When a session is first established, the proxy remembers the name of the policy file referenced by the first page and caches the policy file (or a null placeholder if no policy file is referenced). Any subsequent Web pages that reference the same initial policy file will reuse the cached policy file's privilege groups and tag names, and will be shown within the same browsing session. If there is not a match, either because a different policy file is being accessed or no policy file exists for the requested Web page, then the proxy is forced to ask the user whether a new session should be opened. The ambiguity problem is resolved by the requesting user, who indicates whether the unknown requested Web page should be shown within the existing session or used to establish a new session.

The above definition of procedure may seem recursive, since it compares the current policy file to an initial policy file of an existing session in order to determine whether to establish a new session. The question arises of how the existing session defined by the initial policy file came to be if it followed the same procedure to become established. The solution is that some sessions are created by a different path. As noted above, there are three alternatives for session origination, only the latter two of which cause ambiguity. For the first alternative, (i.e. a session creator is unknown to a proxy and the requested URL is also unknown), it is clear that a new session should be established along with an initial policy file. The first alternative for session origination breaks the recursion and bootstraps the establishment of new sessions.

An alternative to the a posteriori approach of querying the user about establishing a new session after a page request (in the rest of the paragraph, "page request" is synonymous with requesting a Web page whose policy file doesn't match the initial policy file) has been made is the a priori approach of having the user explicitly inform the proxy before a page request is made that the user desires a new session. The end user tells the proxy that the next URL that it requests should be used to establish a new session. However, explicitly informing the proxy a priori requires client-side code to generate the message. This could be provided for example by a frame in a Web page or an applet that included controls used to communicate to a proxy. Reparenting each Web page to insert a controls frame involves its own risks of changing the layout of the Web page. Frame and applet support cannot be depended upon, especially for small-screened PDA's. In contrast, the approach of asking the user whether to establish a new session after a page request has been made doesn't require client-side code, but merely requires forms support by the browser, which is common even in PDA's. The Web page is not modified, and the user's interaction with the Web browser is not modified, i.e. the user continues their normal interaction, pointing and clicking, or entering a new URL. Any actions required of the user are sent as screen prompts to the user. Interaction with the collaborative browsing proxy is self-guided, such that all that the user needs to know is contained in the screen prompts. In contrast, the approach of explicitly informing the proxy a priori requires the user to change the way they interact with the browser in order to use the collaborative Web browsing proxy, i.e. they need to know that they have to explicitly request a new session before pointing and clicking on a new URL. The approach has the disadvantage of resulting in a possibly high frequency of annoying popup menus each time the user requests a Web page that doesn't conform to the initial policy file. This popup effect can be mitigated by extending the scope of the policy file to apply to multiple Web pages. In addition, the popup queries can be completely suppressed using an optional mechanism described below. This optional mechanism does have the same disadvantage of the explicit approach, namely that it requires the user to have knowledge in advance about how to interact with the proxy.

The a posteriori approach of querying a user about establishing a new session after a page request can be complemented with an optional mechanism that allows a session leader to suppress session establishment queries. This would be useful to minimize the frequency of session establishment queries sent to a session leader who accesses many Web pages outside of the scope of the initial policy file. One solution is to provide an on/off button or check box that explicitly suppresses or enables session establishment queries. During a browsing session in which the check box is set to suppress session establishment questions, the session leader is not bothered with repeated queries during the presentation. Of course, while these queries are being suppressed, the session leader will be unable to establish a new session. Each request for a Web page outside of the scope of the initial policy file will be assumed to be a request to show the Web page within the existing browsing session. The Undefined_tags mechanism will override an unknown or missing policy file. Once the queries are reenabled, then the session leader can request a Web page outside of the initial policy file's scope, and will then be queried about establishing a new session. This on/off function is similar to suppressing the popup menus that often appear when a browser encounters a secure Web pages and can be included with the user customization applet downloaded into the browser. If the session leader's browser doesn't support downloadable applets or client-side customization code, then the default setting should be set to enable queries. Explicit suppression of queries is complementary to the a posteriori session establishment mechanism, and therefore is not absolutely necessary to the correct functioning of collaborative Web browsing.

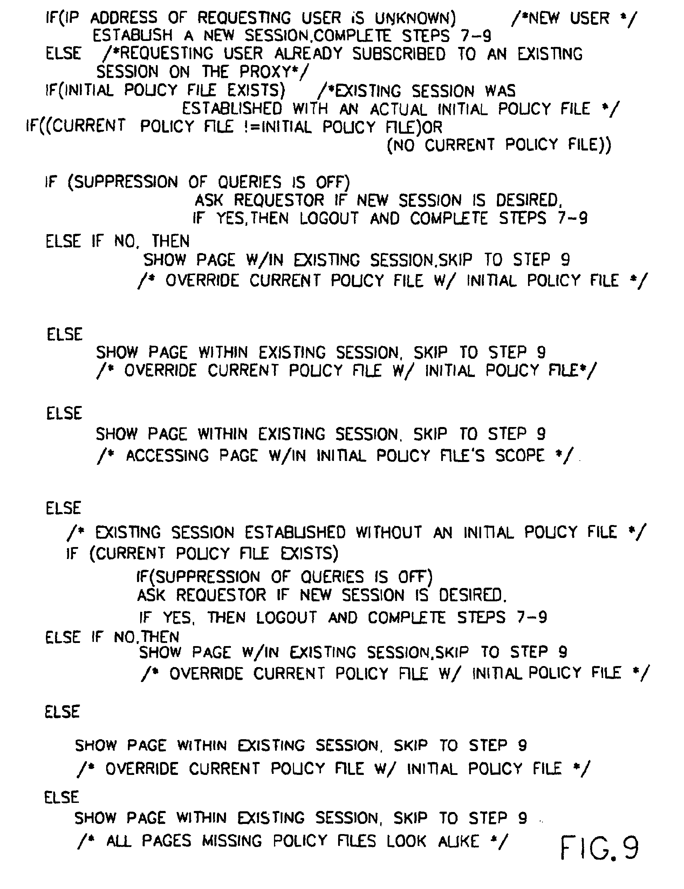

Figure 9 provides pseudo-code summarizing the final algorithm employed by the proxy to determine session establishment when a URL is received. This algorithm is more complex than previously outlined due to numerous special cases that have to be considered. In Figure 9, "Current policy file" refers to the policy file associated with the currently requested Web page/URL. "Show page within existing session" means to send the requested Web page to all subscribers of an existing browsing session, rather than establish a new session based on the requested page.

At this stage, the proxy knows whether or not to set up a new session for the requested Web page. The proxy will therefore either proceed next to user login to initiate a new session, or the proxy will jump past that step and simply deliver the requested Web page to the subscribers of the collaborative browsing session.

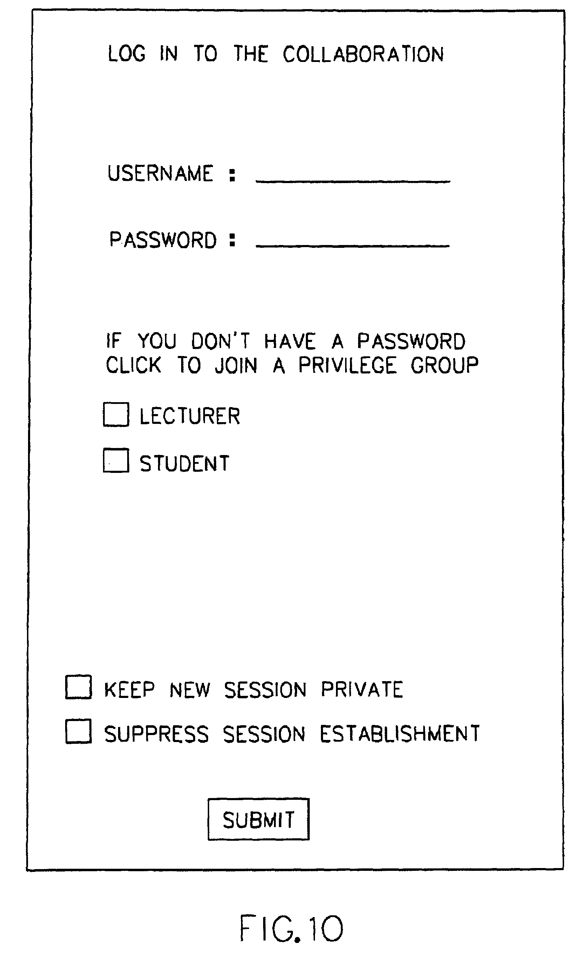

Figure 10 shows a customized login page which the proxy builds for performing the aforementioned "user clearance" of step 807. The proxy needs to include in this login page the list of all the possible privilege groups so that the user can choose the one to which he belongs. After the proxy has dynamically built this page, it is sent to the user, now called a session creator. The hypertext HTML/XML login interface sent to the session creator is shown in Figure 10. This interface is a composite, and not all fields in the interface will be shown to each session creator. The proxy will use the password provided by the login process to classify the session creator into a privilege group, and the username to query the SDDB for the session originator's registered output devices.

The login page is sent to the session creator under one of the following conditions for session establishment: *(conditions i)* if the user is unknown to the proxy; or *(conditions* *ii)* if the user is known to the proxy (subscribes to an ongoing session), and has requested a URL with a policy file that does not match the initial policy file of the ongoing session to which the user is subscribed, and the user has responded "yes" to the question from the proxy asking whether to establish a new session, then establish a new session. Though Figure 8's algorithm differentiated between the cases of initial policy files that existed or were absent during session establishment, *conditions ii* can ignore the distinction without loss of generality and coalesce both cases into one. The login page will vary depending on which set of conditions is used to establish the session.

The session creator will encounter three additional possibilities that will affect the look-and-feel of the login page: *(condition a)* the current policy file is referenced by the requested Web page and defines passwords for all privilege groups; (condition b) the current policy file is referenced but does not define passwords for some privilege groups; *(condition c)* the Web page does not contain a reference to a current policy file.

The first field in the login page asks the session creator to identify their username. This field is only absolutely necessary when the session creator is new to the proxy (condition i), and is not technically needed when the session creator is part of an ongoing browsing session, i.e. the identity of the session creator is already known (condition ii). Given condition i, the proxy needs to know the session originator's username in order to match the session creator with the output devices registered under that username in the SDDB. The provided username should be the same as the username that was registered along with the devices of the session creator. If there is a difference in usernames, then the proxy will be unable to associate the devices with their proper owner. Given condition ii, the proxy has the option of sending the username field. Our current intent is to show this field even though the proxy already knows the session originator's past username. There may be an occasion in which the session creator wishes to change identities while leaving a past session to establish a new session. Of course, the session creator would then have to reregister the devices owned by the session creator under the new username.

The second field asks the user to provide the equivalent of a password so that the proxy can identify the privilege group to which the session creator belongs. What is considered to be equivalent to a password will vary depending on conditions a, b, and c. If access to every privilege group defined in the current policy file is protected by a password (condition a), then the login page will only show the password field. However, if some of the privilege groups are not access-protected by passwords (condition b), then the login page will present a hybrid of a password field and a list of the non-password-protected public privilege groups. An example of this hybrid scenario is shown in Figure 10, in which the public privilege groups "lecturer" and "students" for the slide presentation are not password-protected, and at least one other private privilege group does require password entry. If the session creator wishes to join as a member of a non-password-protected group, then the session creator simply checks the box of the desired public group. Otherwise, the session creator enters the appropriate password. Finally, in case there is no current policy file associated with the requested Web page (condition c), then the proxy creates only one public privilege group. Consequently, only one privilege group is listed with a checkbox, and no password field is shown.

It is assumed that the password is known to the session creator in advance via some out-of-band method, such as an email from the author of the first Web page in a slide presentation. However, every member of an audience may not always be known a priori, so that prior password distribution cannot always be assumed. For example, some students who wish to subscribe to an ongoing browsing session may have forgotten their password, never received a password, or may be new to a class. In these instances, support for public non-password-protected privilege groups enables such students to easily join an ongoing browsing session without requiring every subscriber to know the password.

The third field is a box that the session creator can check should the session creator desire to keep the session private or single-user. If the box is checked, then the session is not advertised to the SDDB. In this case, the session creator wants to take advantage of the multi-device capability of our proxy, but not the collaborative features. Even though a reference to a policy file by the requested Web page (conditions a and b) would seem to imply that a public collaborative session should be set up, it is preferable to not impose the restriction that the existence of a policy file necessarily forces a new session to be public or collaborative. Full flexibility is provided to the session creator to decide on the public/private nature of the session, regardless of whether the requested Web page references a policy file.

The fourth field is a box that the session creator can check if the session creator wishes to immediately suppress any queries during the ensuing Web browsing session asking whether to form a new session. Such queries are generated when condition ii holds true, namely when a session leader visits a variety of Web sites whose policy files differ from the initial policy file used to establish a session. The option is provided in the login page so that a user who will be frequently straying outside of the scope of the initial policy file can immediately suppress repeated queries. The user fills the login form and submits it to the proxy.

The data push process is initialized at this stage. For Netscape and IE, data push is going to use an applet downloaded to the client's machine. This applet is downloaded when the login page is sent to the user; which means that, from this point, the proxy can push data to the browser.

Now that the proxy knows that a session has to be established (the session creator was a allowed to establish this session), it can register it with service discovery so that it gets advertised and people can join it. The proxy uses the information contained in the policy file to register this session with service discovery. It registers it providing a URL as access mode. This is the URL of the dynamic login page that it built from the policy file which specifies a list of privilege groups for this session, asks for a password and the name of the user (figure 10). The API function call used to register with the service discovery database would look like (specific call will depend on the protocol selected):
*register(name,access_url,proxy_@) ;*
where *name* identifies the session (ex: Transcoding proxy)
*access_url* is the url of the form created by the proxy for registration
*proxy_@* is the address of the proxy hosting the session
After this step, the service discovery will list the session as a service available in the room and that end-user can join. The registered session appears in the right column of the box to the right of the SDDB in Figure 6.

Service discovery should permit the ability to "unannounce" a registered session. For example, if a user clicks on the "want private session", then the session should be taken off of the session list in the SDDB.

The proxy also retrieves information on the devices registered by the user. In particular, it needs to learn the access mode for the device the user is using to establish the session. The access mode in this case will be the type of browser the session creator is using (IE, Netscape,Pocket IE). This information is used by the proxy to know the format of the data it should send to the user. For example, if it is an IE 5 browser, the proxy could directly send an XML document since IE 5 is XML enabled but if it's Netscape, it will have to create an HTML document since the currently available versions of Netscape doesn't understand XML.

The proxy needs to learn about the devices owned by the user but also the public infrastructure available in the room. It will use this information to design a personalization form to allow the user to choose a more detailed splitting of the data, such that he will choose the output device to which each portion of what he is allowed to see is sent. For each of these device, the proxy needs to know how to send data to it. For example, the user could be communicating with the proxy using a Palm Pilot* so it's probable that the rules file will tell the proxy not to send the mpeg files to this end-device. But when the proxy queries the SDDB, the SDDB returns that their is a public display in the room that can be used by anybody. So the proxy can build a personalization form where the mpeg tags can be associated with the public display. SDDB should have also sent information on how to access this display such as whether it expects a stream of data or an mpeg file.

Once the proxy knows about this "session", the tags associated with this session, the groups associated with this session, the default mappings of tags to groups, (even more precisely the default mappings of tags to software/hardware devices within each group) are known. The proxy also has announced the session to the SDDB and there is one user logged on, the session creator. Next, the proxy will find out individual users, the group each user belongs to, and the devices associated with each user.

The proxy knows which subset of the original document (which tags) can be received by the session creator (given his privilege group and the device he is using). Therefore, the proxy can build the XSL transformation file customized for this user. This file will select from the original XML file only the tags that the user is allowed to receive and is capable of receiving. Then, depending on which end-device is the document's destination, it can be converted into HTML or sent directly to the end-user. The format to be used has been learned during discovery of the user's devices, as mentioned above. At this point, the proxy can send the partial view that the user is allowed to see.

### Joining an Established Session

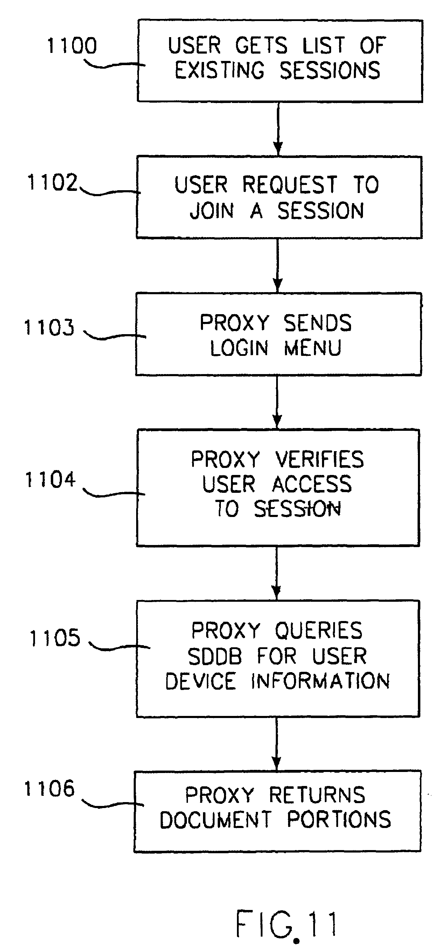

Step 740 of the process flow depicted in Figure 7 relates to new users and/or devices joining an established session. This joining process comprises the following five steps as shown in Figure 11. At step 1100, each new client location/user registers itself to the service discovery database and retrieves a list of existing browsing sessions. When a user comes to the room where the session is going on, or wishes to join a remote lecture, the user first registers any devices owned by the user with service discovery. Next, the user retrieves the list of available services from the service discovery database. An example list of proxies and their supported sessions is shown in Figure 6. There may be multiple sessions per proxy.

Next, the new user requests to join or subscribed to one of the existing collaborative browsing sessions at step 1102. The user receives a list of ongoing sessions which are displayed in order that the user can manually select the desired session. Each session record provided consists of a three pieces of session information, namely the proxy IP address, proxy port number, and URL of the session. The information in the above session record must transferred from the service discovery interface to the user's browser either by manual or automatic methods. The user selects a session from the list (instead of a proxy as above. If the browser supports automatic setting of proxy parameters and automatic fetching of the session's URL, then the response to the user's click upon the session name is to start a browser process, initialize the proxy parameter fields, and request the browser to fetch the session's URL. If the browser does not support automatic transfer, then the user must manually start the browser, set the browser's proxy parameter fields, and then type in the session's URL.

At the proxy, all URL requests are intercepted, and based on the requested URL as well as the port number on which the URL request arrived, the proxy can ascertain whether the requester is asking to join an existing session, and if so which session is desired. If the request is determined to be a join request, then the user is sent the appropriate login page for that session.

At step 1103, the proxy sends a login menu to each potential subscriber requesting the username and password. The login menu is sent to the end user. This login menu resembles Figure 10, except that the user, called a subscriber from now on, won't have the checkbox option to keep the session private. The user will have all other fields available, and will have to enter a username and either enter a password or click on a privilege group. Note that joining a session involves fewer steps than establishing a session, since joining a session skips the session establishment menu, and the downloading of the first XML page and policy file. As with the session establishment process flow, the data push applet is downloaded and initialized within the client.

Once the proxy has determined that the user is authorized to join the collaboration session at step 1104, the proxy sends a request to the service discovery database in step 1105. The request to the service discovery database asks for a list of all devices registered to the newly logged-in user. While the proxy could query the newly-logged in user for this information, it is preferable to utilize the available user device information which has already been stored at the service discovery database, as discussed above. As in the session establishment process detailed above, this step comprises the task of retrieving the list of all devices registered to the new subscriber; however, for the session joining process flow, there is no need to announce the session to service discovery.

Finally, at step 1106, the proxy returns the appropriate partial view (i.e., document portion or portions) of the Web page to the newly-logged in user for display at one or more of the user devices. The partial view of a Web page is pulled both by the new subscriber as well as the session creator, since both are expecting a response back from the proxy due to their login entries. In addition, both the new subscriber and the session creator have downloaded an applet that can respond to push events initiated by other members of the session who have input permission. When another member requests a new page, the proxy pushes this update to the displays of the session members or send new data to the subscribed end-devices (like to a speaker).

In the case of the end-device being a browser, it is necessary to know the type of browser used to decide which method to use to push the data. At registration time, the proxy learns which end-user is using which browser type by completion of the User-Agent field of the HTTP header. The proxy then knows how to initiate data push according to the type of browser. In the case of non-browser devices, the information returned by service discovery should either directly tell the proxy how to access those devices or should give the proxy a way to learn how to communicate with the end device.

### Sub-document to Device Mapping

After a subscriber has joined an established session, or a session creator has finished with session establishment, each participant in the session may configure the mappings of tags to devices according to the user's personal tastes. The proxy initially uses the information provided by the policy file to construct a default mapping of permitted tags to permitted output devices. However, this default mapping may not satisfy the end user and, as noted above with reference to step 760 of the process flow detailed in Figure 7, the session creator may wish to dynamically alter the mapping of document portions to output devices. The session creator can see on his device the default settings created for him and can decide that he wants to customize at a finer level by deciding which tags should go to which device. The default configuration done by the proxy could, for example, send only the tags that the session-initiating device is capable of showing, which can be constraining in cases of small devices. As a result, the session creator will use a personalization form to make the splitting of the data more convenient for him.

The personalization button could be located on a control panel, along with the logout button. The user would do the initialization of the session on one browser window; but, when the proxy is ready to send the partial view to the user, it would do it in a child window. He would send a control panel to the parent window, such that the user would have two windows: one for following the browsing session and one control window. The control panel would contain a button to let the user logout from the session. User invocation of the control logout button tells the proxy to remove this user from the list and to delete all of the transformation files that applied to him. The control panel also contains a button for personalization such that, if the user is not satisfied with the current settings, he can request the personalization form and change the associations between tags and devices.

When the user clicks on the "customize" button, the proxy is contacted and returns a third screen of information. The proxy has all the information needed to create the mapping of permitted multimedia tags to permitted output devices. The tags are taken from the XML file. The user identity and group to which the user is associated is taken from user login/registration. The list of available devices and their owner are taken from service discovery. This allows the proxy to build a mapping of permitted tags to permitted devices. This mapping is exposed to the end user when the "customize" button is clicked and the user may simply "pull" a tag to the appropriate listed device to change the mapping.

Normally, a user registers multiple devices before logging into the session. However, the user may wish to add a device after logging in. In this case, after registering with SDDB, the new device will automatically start receiving a media feed, and the applet will be automatically updated. One option is to use a callback() function. Callback tells service discovery to inform/notify the proxy if a user matching a given username registers any new devices (analogous to select() in UNIX). Similar to the push/pull problem between proxy and client, callback permits service discovery to push new updates to the proxy. Callback is an efficient mechanism and also enables automatic update of the proxy's state for each user. However, callback imposes a functional burden on service discovery that may not be supported across most, or even some, service discovery protocols.

Another option is to have manual update via a "refresh" button on the customization screen received by the end user. When the user clicks on the "customize" button, this is equivalent to a refresh. However, if the end user has opened a customization screen for a time, and has not updated that screen, then it is necessary to also include a "refresh" button on the customization screen. The refresh button on the customization screen, in combination with the customize button on the first screen, avoid the necessity for a callback function. Instead, the end user manually initiates all updates of the proxy state (and customization screen) when new devices are added. The end user essentially pulls data corresponding to devices newly registered to that user from service discovery, through the proxy, and onto the customization screen.

While the invention has been described with reference to several preferred embodiments, it is understood that one skilled in the art may modify the detailed system and method without departing from the spirit and scope of the invention as set forth in the appended claims

## Claims

1. A method for selectively providing document content from a server to a plurality of client locations comprising the steps of:
providing at least one document from the server to a proxy;
selectively dividing the at least one document into more than one document portions; and
selectively providing at least one of the more than one document portions to each of the plurality of client locations.

2. The method of Claim 1 wherein said at least one document contains a link to at least one other file, said method further comprising said proxy prefetching said at least one other file and caching said at least one other file.

3. The method according to any one of the previous claims further comprising the steps of:
said proxy determining that said at least one document has an associated policy file; and
accessing said policy file.

4. The method according to any one of the previous claims wherein said selectively dividing step comprises splitting the document into document portions in accordance with said policy file.

5. The method according to any one of the previous claims wherein said policy file designates client access information and wherein said selectively providing step comprises directing document portions to client locations based on said client access information.

6. The method according to any one of the previous claims wherein selectively providing document portions comprises directing less than all of said document portions to at least one of said plurality of client locations.

7. The method according to any one of the previous claims wherein said plurality of client locations comprises a plurality of devices for outputting content at one client location.

8. The method according to any one of the previous claims further comprising the step of:
said proxy determining the content output capabilities of each of said plurality of devices.

9. The method according to any one of the previous claims further comprising the steps of:
conducting service discovery with said client location; and
creating a service file for said client location.

10. The method according to any one of the previous claims wherein said conducting and creating steps are executed at said proxy.

11. The method according to any one of the previous claims further comprising said proxy accessing said service file.

12. The method according to any one of the previous claims wherein said selectively dividing step comprises splitting the document into document portions based on said content output capabilities.

13. The method according to any one of the previous claims wherein said selectively dividing step comprises splitting the document into document portions based on said service file.

14. The method according to any one of the previous claims further comprising said proxy mapping said document portions to said plurality of devices.

15. The method according to any one of the previous claims further comprising a user at said client location dynamically altering said mapping.

16. The method according to any one of the previous claims additionally comprising the step of:
said proxy transcoding at least one of said more than one document portions.

17. The method according to any one of the previous claims additionally comprising the step of:
said proxy transcoding at least one of said more than one document portions based on said content output capabilities.

18. The method according to any one of the previous claims further comprising the steps of:
creating at least one document; and
storing said at least one document at said server.

19. The method according to any one of the previous claims further comprising the steps of:
defining at least one policy file for said at least one document; and
associating said at least one policy file with at least one of said documents

20. The method according to any one of the previous claims wherein said associating step comprises incorporating said policy file into said at least one document.

21. The method according to any one of the previous claims wherein said defining at least one policy file step comprises specifying a plurality of document portions for said at least one of said documents.

22. The method according to any one of the previous claims further comprising establishing access rules for each of said plurality of document portions.

23. The method according to any one of the previous claims further comprising establishing privilege groups for access to each of said plurality of document portions.

24. The method according to any one of the previous claims wherein said privilege group identifies clients who can access each of said plurality of document portions.

25. A method for establishing a collaborative Web browsing session in response to a request from a client session requester in a system comprising a plurality of client locations, a Web server, at least one service discovery database, and a plurality of proxy components located between said Web server and said plurality of client locations, comprising the steps of:
said proxy registering with said service discovery database;
said session requester registering with said service discovery database;
said session requester selecting a proxy;
said session requester sending a request to create a session to said proxy;
said proxy requesting session information comprising at least session name and storage location for at least one session document;
said session requester inputting said session information;
said proxy fetching said at least one session document;
said proxy making a determination as to whether a policy file exists for said at least one session document;
said proxy selectively dividing said at least one session document into more than one document portions based on said determination; and
said proxy selectively providing said more than one document portions to at least one of said plurality of client locations.

26. The method of Claim 25 further comprising at least one new user joining said session, said joining comprising the steps of:
said at least one new user obtaining a list of existing sessions;
said at least one new user selecting one selected session of said existing sessions and generating a request to join said selected session;
said proxy providing a login menu to said at least one new user;
said proxy verifying user access for said at least one new user;
said proxy querying said session discovery database for user output device information; and
said proxy selectively delivering at least one of said more than one document portions to at least one device of said at least one new user based on said user output device information.

27. A system, in particular a server selectively providing document content to a plurality of client locations, comprising means adapted for carrying out the methods according to any one of the previous claims.

28. A program storage device readable by machine, tangibly embodying a program of instructions executable by the machine in order to carry out the methods according to any one of the claims 1 to 26.
